# EUROPÄISCHE PATENTSCHRIFT

(11) **EP 4 266 012 B1**
(45) Veröffentlichungstag und Bekanntmachung des Hinweises auf die Patenterteilung: **24.07.2024**
(21) Anmeldenummer: 22168889.8
(22) Anmeldetag: 19.04.2022
(51) Int. Cl.: G01F 23/284, G01F 23/2962

(54) **FÜLLSTANDMESSGERÄT MIT WÄHLBARER GÜTESTUFE EINER ÜBERWACHUNGSFUNKTION**
LEVEL GAUGE WITH SELECTABLE QUALITY LEVEL OF A MONITORING FUNCTION
APPAREIL DE MESURE DE NIVEAU DE REMPLISSAGE À DEGRÉ DE QUALITÉ D'UNE FONCTION DE SURVEILLANCE POUVANT ÊTRE SÉLECTIONNÉ

(43) Veröffentlichungstag der Anmeldung: 25.10.2023
(73) Patentinhaber: VEGA Grieshaber KG, 77709 Wolfach (DE)
(72) Erfinder: HOFERER, Christian, 77652 Offenburg (DE); HERRMANN, René, 77709 Oberwolfach (DE); KAUFMANN, Manuel, 77791 Berghaupten (DE); GAISER, Martin, 72275 Alpirsbach (DE); BENZ, Joachim, 77756 Hausach (DE)
(74) Vertreter: Maiwald GmbH

(56) Entgegenhaltungen:
- WO-A2-2005/062000
- US-A1- 2012 174 664
- US-A1- 2013 213 132
- US-A1- 2015 009 063
- US-A1- 2015 192 449
- US-A1- 2020 333 176
- US-A1- 2022 065 685
- US-B2- 8 830 118

## Beschreibung

### Gebiet der Erfindung

Die Erfindung betrifft ein Füllstandmessgerät, ein Verfahren zur Inbetriebnahme eines Füllstandmessgeräts und eine Verwendung des Füllstandmessgerätes.

### Hintergrund

Bei einer Inbetriebnahme eines Füllstandmessgeräts, sind in vielen Fällen eine Vielzahl von Referenz-Messungen erforderlich, um eine hohe Sicherheit und/oder Messgenauigkeit nach der Inbetriebnahme des Füllstandmessgeräts zu erhalten. In der Prozessindustrie werden zunehmend Anforderungen an Füllstandsensoren gestellt, dass diese nicht nur eine Messaufgabe erfüllen, sondern vielmehr diese Messaufgabe auch sicher erfüllen müssen. Die Anmeldung US 2012/174664 A1 beschreibt eine elektronische Einheit und ein Verfahren für ein Füllstandsmessgerät zur Bestimmung eines Füllstands. Die Einheit enthält eine arithmetische Einheit, die eine funktionale Beziehung zwischen einem Abstand zwischen einer Oberfläche eines Füllmaterials und der Füllstandsmessvorrichtung und einer Amplitude einer Signalkomponente bestimmt, die von der Oberfläche des Füllmaterials erfasst und von der Füllstandsmessvorrichtung empfangen wird; einen Amplitudenprofiler, der eine Profile von Amplitudenwerten der bisher gemessenen Füllstandechos erzeugt; und einen Amplitudenauswerter, der mit Hilfe der Profile von Amplitudenwerten eine erwartete Amplitude des Füllstandechos an einem bestimmten Ort bestimmt.

### Offenbarung der Erfindung

Das sichere Erfüllen der Messaufgabe bedeutet für ein Füllstandmessgerät, dass das Füllstandmessgerät, entweder den innerhalb seiner Genauigkeitsklasse korrekten Füllstand ermitteln konnte oder eine Störung meldet, wenn es dem Füllstandmessgerät nicht gelingen sollte, den Füllstand eindeutig festzustellen. Je nach Anwendung ist vor einem sicheren Betrieb, mittels einer Inbetriebnahme, zu gewährleisten, dass der Füllstandsensor die Messaufgabe sicher erfüllt. Hierzu wird von einem Anlagenbetreiber verlangt, unter Prozessbedingungen verschiedene Füllstände anzufahren, um den sicheren Betrieb zu gewährleisten.

Insbesondere die Forderung, dass Prozessbedingungen hergestellt werden müssen, zeigt sich in der Praxis als schwierig. So ist z.B. während der Inbetriebnahme die Temperatur des Füllstandsensors eine andere als wenn der Prozess schon mehrere Stunden aktiv ist. Auch sind beispielsweise Anhaftungen oder Verschmutzungen an einer Antenne bei einem Radar-Füllstandmessgerät denkbar, die ein Messsignal im laufenden Betrieb kontinuierlich verändern. Zudem ziehen es manche Anlagenbetreiber vor, gefährliche chemische Gemische während der Inbetriebnahme durch z.B. Wasser zu substituieren. In der Praxis zeigt sich folglich, dass eine Inbetriebnahme nie exakt die Sensoranwendung im laufenden Betrieb abbilden kann. Ein herkömmliches Füllstandmessgerät offenbart aufgrund dieser Diskrepanz einen fehlenden Sicherheitsaspekt.

Gemäß Aspekten der Erfindung wird ein Füllstandmessgerät, ein Verfahren zur Inbetriebnahme eines Füllstandmessgerät und eine Verwendung eines Füllstandmessgeräts gemäß den Merkmalen der unabhängigen Ansprüche, vorgeschlagen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist. Der Fachmann wird aber erkennen, dass viele der Verfahrensschritte auch in einer anderen Reihenfolge durchlaufen werden können und zu dem gleichen Ergebnis führen. In diesem Sinne kann die Reihenfolge der Verfahrensschritte entsprechend geändert werden und ist somit auch offenbart.

Gemäß einem Aspekt wird ein Füllstandmessgerät, zur Bestimmung eines Füllstands eines Mediums vorgeschlagen, mit einer Auswerteeinheit, die eingerichtet ist:
- basierend auf einem digital gewandelten Signal eines reflektierten Signals, insbesondere eines reflektierten Anteils eines Signals, das von dem Füllstandmessgerät in Richtung auf das Medium ausgesandt wurde, ein Messsignal zu generieren, um basierend auf einem charakteristischen Merkmal des Messsignals, den Füllstand zu bestimmen;
- mittels einer Überwachungsfunktion die Bestimmung des Füllstands, die auf dem charakteristischen Merkmal basiert, zu überwachen, wobei die Überwachungsfunktion wahlweise zumindest eine höhere Gütestufe oder eine geringere Gütestufe an die Bestimmung des Füllstands aufweist und/oder für die Überwachung anwendet; und
- den Füllstand des Mediums wahlweise in einem Betriebsmodus oder einem Inbetriebnahme-Modus zu bestimmen, wobei sich eine Gütestufe der Überwachungsfunktion im Betriebsmodus von einer Gütestufe der Überwachungsfunktion im Inbetriebnahme-Modus unterscheidet.

Dabei kann das digital gewandelte Signal ein elektrisches Signal sein, das mittels des Füllstandmessgerätes, basierend auf dem reflektierten Signal generiert wird. Das reflektierte Signal kann ein vom Füllstandmessgerät empfangener reflektierter Anteil eines ausgesendeten (Sende-)Signals sein, das von dem Füllstandmessgerät in Richtung auf das Medium ausgesandt wurde.

Das Füllstandmessgerät kann eine Sendeeinrichtung aufweisen, die eingerichtet ist, ein Signal in Richtung auf das Medium auszusenden, und eine Sensoreinheit, die eingerichtet ist reflektierte Signale, zu empfangen, sowie diese digital zu wandeln. Weiterhin kann das Füllstandmessgerät einer Auswerteeinheit aufweisen, die eingerichtet ist, empfangene und digital gewandelte Signale in ein Messsignal, bzw. eine Echokurve, zu wandeln. Die Auswerteeinheit ist weiterhin zur Auswertung des Messsignals eingerichtet, um einen Füllstand, basierend auf dem Messsignal, zu bestimmen, wie nachfolgend beschrieben ist. Die Sendeeinrichtung mit der Sensoreinrichtung und die Auswerteeinheit kann insbesondere als integrierte Hardware auf derselben Platine oder auf demselben Chip realisiert sein.

Der Füllstand kann einen Abstand des Füllstandmessgerät zu einer Oberfläche des Mediums, bzw. eines Füllgutes, angeben, wobei sich das Medium beispielsweise in einem offenen oder geschlossenen Behälter befindet.

Das Messsignal, auch Echokurve genannt, resultiert aus einem digital gewandelten Signal, das zumindest auf einem Anteil eines reflektierten Signals basiert, das vom Füllstandmessgerät in Richtung auf das Medium ausgesandt wurde. Um das Messsignal (bzw. der Echokurve) einer Messung zu generieren, können je nach angewandtem Messprinzip, wie beispielsweise beim Radar-Füllstandmessgerät oder beim Ultraschall-Füllstandmessgerät oder beim geführtes Radar-Füllstandmessgerät, unterschiedliche Verfahren eingesetzt werden.

So kann z.B. bei einer Messung mit Ultraschall das Messsignal mittels eines ausreichend schnellen A/D-Wandler direkt nach Empfang und elektronischer Aufbereitung, z.B. durch Filterung oder Verstärkung des reflektierten Signals, abgetastet werden. Bei Radar-Messgeräten, deren elektromagnetische Wellen sich mit Lichtgeschwindigkeit ausbreiten, kann das Messsignal mit zusätzlichen Schritten generiert werden. Hierfür eignet sich z.B. ein Puls-Laufzeitverfahren oder ein FMCW-Verfahren (FMCW; engl. frequency modulated continuous wave). Beiden Verfahren gemein ist, dass hier die Erfassung der kurzen Laufzeit des Signals mit zusätzliche Verfahrensschritten erfolgen kann. Beispielsweise kann bei dem FMCW-Verfahren der A/D-Wandler eine sogenannte Beatkurve, also ein Zwischenfrequenzsignal, das nach der Mischung aus einem gesendeten und entsprechend empfangenen Chirp-Signal entsteht, erzeugt werden. Das Messsignal, bzw. die Echokurve, kann anschließend aus dem logarithmierten Ergebnis einer Fourier-Transformierten der A/Dgewandelten Beatkurve gewonnen werden.

Typischerweise, kann, insbesondere der von Oberflächen des Mediums, reflektierte Signalanteil, vom Füllstandmessgerät detektiert und zeitabhängig aufgezeichnet werden, um die Echokurve zu erhalten. Diese Zeitabhängigkeit kann über die Geschwindigkeit des Signals in eine Entfernung einer reflektierenden Oberfläche vom Füllstandmessgerät umgerechnet werden und beispielsweise als Echo-Signal interpretiert werden. Typischerweise weist ein solches Messsignal mehrere lokale Maxima auf, die auch als Echo bezeichnet werden.

Alle Auswertungen und Bestimmungen, die mittels des Füllstandmessgeräts durchgeführt werden, können sowohl auf einem gesamten digital gewandelten Signal und/oder einem gesamten Messsignal durchgeführt werden, als auch an Teilen des jeweiligen digital gewandelten Signals und/oder an Teilen des Messsignals, insbesondere um die Auswertungen und die Bestimmungen mit minimalen Rechenressourcen durchführen zu können.

Das ausgesandte Signal des Füllstandmessgerät kann beispielsweise eine Pulsform aufweisen, wie bei einem Pulsradar-Füllstandmessgerät, oder ein Signal mit einem linearen Frequenzhub aufweisen, wie beispielsweise bei dem FMCW-Radar Füllstandmessgerät.

Wenn beispielsweise aufgrund einer großen Oberfläche des Mediums ein starkes Signal reflektiert wird, ist die Amplitude des Messsignals nach der Laufzeit des Signals entsprechend hoch. Diese hohe Amplitude eines lokalen Maximums des Messsignals, die von einer Oberfläche des Mediums reflektiert wird, kann als charakteristisches Merkmal des Messsignals zur Bestimmung des Füllstands definiert werden.

Typischerweise reflektieren Flüssigkeiten mit einer hohen Dielektrizitätskonstante (DK-Wert) Radarsignale relativ stark. Eine Füllgutoberfläche, die Radarwellen nicht stark reflektiert, wäre z.B. ein grobkörniges Schüttgut, und/oder Flüssigkeiten mit kleinen DK-Werten (Dielektrizitätskonstanten), wie z.B. LPG (Liquified Petroleum Gas), Öle und Lösungsmittel. Weitere lokale Maxima, bzw. Echos können z.B. durch Einbauten in dem Behälter, durch Anhaftungen, etc. verursacht sein, die beispielsweise zwischen der Füllgutoberfläche und der Sendeeinheit angeordnet sind.

Ein globales Maximum des Messsignals kann typischerweise in einem Nahbereich eines Radar-Füllstandmessgerät durch Störungen, die z. B. bei der Antenneneinkopplung verursacht werden, auftreten. Solche Störungen, wie das sogenannte "Antennenklingeln", können zurückgeführt werden auf Signal-Reflexionen von einer Hornantenne, die als Sendeantenne des Radar-Füllstandmessgerät dient oder von einem sog. "Dom", z.B. einem Schacht, in dem der Sender angeordnet ist, und der in zumindest einigen Fällen oben an einer Innenseite des Behälters angeordnet ist, hervorgerufen werden.

Weil Amplitudenwerte, die in einem Nahbereich des Radar-Füllstandmessgeräts gemessen wurden, meist keine "Nutz-Information" wiedergeben, also auf keine Reflexion von einer Füllgutoberfläche zurückzuführen sind, können Echos von dem Nahbereich, z.B. durch eine sog. "Werks-Störsignal-Ausblendung", bereits beim Hersteller von einer Bewertung ausgenommen werden. Beispielsweise kann ein solcher Nahbereich Messdistanzen von z.B. weniger als 10 cm oder 20 cm von dem Sender, z. B. von einem Sender-Chip, betreffen. Dies Ausblenden kann z.B. dadurch erfolgen, dass vor einer Auswertung des Messsignals von einem gemessenen Messsignal eine vorher festgelegte Messsignal-Kurve subtrahiert wird. Die vorher festgelegte Messsignal-Kurve, bzw. Referenzechokurve, kann im Wesentlichen einer Messsignal-Kurve entsprechen, die für einen leeren Behälter, auf einer Referenzstrecke oder im Freifeld bestimmt wurde.

Im weiteren Verlauf des Messsignals kann dann das charakteristische Merkmal für eine Bestimmung des Füllstands durch ein lokales Maximum erkannt werden und weitere lokale Maxima können durch signifikante Merkmale des Messsignals andere reflektierende Oberflächen, bzw. Störung, in einem Erfassungsbereich des Füllstandmessgerät anzeigen. Die Störungen können auf viele verschiedene Ursachen zurückgeführt werden.

Ein signifikantes Merkmal kann ein lokales Maximum in dem Messsignal sein, das insbesondere eine Amplitude aufweist, die über einem definierten Schwellwert und/oder einer definierten Schwellwertkurve liegt.

Da auch andere Objekte das ausgesandte Signal reflektieren können und als Störungen auftreten können, muss das Messsignal bewertet werden, um das charakteristische Merkmal zu identifizieren, und damit eine Entfernung des Mediums vom Füllstandmessgerät zu bestimmen.

Das Messsignal kann in einem Diagramm dessen x-Achse eine Entfernung D, in linearer Darstellung, und dessen Y-Achse eine Amplitude A des Messsignals, in dB charakterisiert, visualisiert werden.

Die Auswerteeinheit des Füllstandmessgeräts kann eingerichtet sein, neben der Bestimmung des Füllstands, mittels einer Überwachungsfunktion, eine Güte der Bestimmung des Füllstands basierend auf dem charakteristischen Merkmal zu überwachen, um zu bestimmen ob eine Messaufgabe zur Bestimmung des Füllstands sicher gelöst wird.

Mit anderen Worten, kann mittels der Überwachungsfunktion zyklisch eine Güte des Messsignals bzw. eine Güte des charakteristischen Merkmals und/oder die Auswertung des charakteristischen Merkmals, zur Bestimmung des Füllstands, überprüft werden. Die Überwachungsfunktion bzw. die Auswerteeinheit kann eingerichtet sein, bei einer als unsicher bestimmten Messung bzw. Bestimmung des Füllstands einen Fehler und/oder eine Warnung anzuzeigen.

Beispielsweise kann die Überwachungsfunktion für ein Füllstandmessgerät einen Amplitudenwert von dem Messsignal auswerten. Hierfür kann die Überwachungsfunktion den Amplitudenwert des Messsignals mit einer Mindestamplitude vergleichen und kontinuierlich überwachen. Unterschreitet der Amplitudenwert des Messsignals der Füllgutoberfläche, also der Amplitudenwert des charakteristischen Merkmals zur Bestimmung des Füllstands, diesen Amplitudenwert um einen festgelegten Betrag und/oder einen parametrieren Betrag, so generiert die Überwachungsfunktion ein Fehlersignal, wie beispielsweise eine Störmeldung, und stellt dieses Fehlersignal an einem Ausgang der Auswerteeinheit bereit.

Das Füllstandmessgerät und/oder die Auswerteeinheit kann eingerichtet sein, dass der überwachte Amplitudenwert des charakteristischen Merkmals sowie der parametrierte Betrag für die Überwachung entsprechend einem aktuellen Betriebsmodus des Füllstandmessgerät ausgewählt und/oder, beispielsweise durch Parametrierung, angepasst werden kann.

Insbesondere für eine Inbetriebnahme des Füllstandmessgerät kann der festgelegte oder parametrierte Betrag für das Überprüfen des Amplitudenwerts des charakteristischen Merkmals höher gewählt werden, als im normalen Betriebsmodus des Füllstandmessgerät. Das bedeutet, dass das Füllstandmessgerät bei der Inbetriebnahme die Bestimmung des charakteristischen Merkmals für die Bestimmung des Füllstands empfindlicher überprüft und/oder gegebenenfalls ein entsprechendes Fehlersignal eher bereitstellt als im normalen Betriebsmodus des Füllstandmessgeräts.

Mit anderen Worten ist die Auswerteeinheit eingerichtet, mittels der Überwachungsfunktion während der Inbetriebnahme des Füllstandmessgerät empfindlicher auf etwaige Störungen im Messsignal oder auf Störungen des charakteristischen Merkmals selbst, die sich auf die korrekte Bestimmung des charakteristischen Merkmals auswirken können, reagiert. Dadurch kann erreicht werden, dass bei der Inbetriebnahme Parameter für die Bestimmung des charakteristischen Merkmals des Messsignals, bzw. für die Bestimmung des Füllstands, optimiert werden, um einen sicheren Betrieb am Betriebsmodus zu erreichen.

Effekte und/oder Störungen, die eine sichere Bestimmung des Füllstands beinträchtigen könnten, wie beispielsweise ein Rührwerk im Erfassungsbereich des Füllstandmessgeräts und/oder Wellen auf der Oberfläche des Füllguts und/oder geformte Oberflächen des Füllguts, die sich auf die Amplitude des Messsignals auswirken, und/oder Temperatureffekte können somit im Inbetriebnahme-Modus von der Überwachungsfunktion empfindlicher detektiert werden und in Form einer Störmeldung bekannt gegeben werden. Vorteilhafterweise kann bei der Inbetriebnahme, beispielsweise aufgrund einer Störmeldung, eine modifizierte Parametereinstellung für die Bestimmung des charakteristischen Merkmals des Messsignals, und/oder der Überwachungsfunktion erfolgen. Eine solche Parametereinstellung kann beispielsweise eine Veränderung der Stärke des ausgesendeten Signals und/oder einer Mittelung des Messsignals betreffen, damit der eigentliche Betrieb des Füllstandmessgerät nicht nur sicher, sondern auch zuverlässig erfolgt.

Dadurch kann im Betriebsmodus ein manuelles Eingreifen, insbesondere in die Parametrisierung, wie bei der Inbetriebnahme, weitgehend ausgeschlossen werden. Somit kann das Füllstandmessgerät, insbesondere mittels der Überwachungsfunktion, die wahlweise unterschiedlich empfindliche Gütestufen für die Bestimmung des Füllstands aufweist, verbessert für sicherheitskritische Anwendungen verwendet werden.

Mit anderen Worten, ist der Füllstandsensor eingerichtet, neben der klassischen Auswertung des Messsignals zusätzliche Überwachungsfunktionen auszuführen, die überwachen, ob die Messaufgabe sicher gelöst wird. Durch die wählbaren unterschiedlichen Gütestufen der Überwachungsfunktion, ist der Füllstand Sensor eingerichtet, während der Inbetriebnahme des Sensors empfindlicher auf etwaige Störungen zu reagieren, um gegebenenfalls schon während der Inbetriebnahme Anpassungen der Parametereinstellungen zur Bestimmung des Füllstands vorzunehmen. Somit ist das Füllstandmessgerät eingerichtet, durch die Überwachung des Messsignals selbst und die Überwachung der Auswertung desselbigen, die Bestimmung des Füllstands, angepasst an die Inbetriebnahme als auch an den Betriebsmodus zyklisch zu überprüfen.

Gemäß einem Aspekt wird vorgeschlagen, dass das Füllstandmessgerät auf einer Bestimmung einer Laufzeit des ausgesandten Signals basiert; und insbesondere ein Radar-Füllstandmessgerät oder ein Ultraschall-Füllstandmessgerät oder ein geführtes Radar-Füllstandmessgerät bzw. ein Füllstandmessgerät mit geführter Mikrowelle ist.

In dieser Beschreibung werden die unterschiedlichen Aspekte der Erfindung oftmals am Beispiel eines Radar-Füllstandmessgerät näher erläutert bzw. näher ausgeführt. Die Erfindung kann aber insbesondere für alle Füllstandmessgeräte verwendet werden, bei denen die Bestimmung des Füllstands auf der Laufzeit eines Signals basiert.

Ein Füllstandmessgerät, das auf einer Bestimmung der Laufzeit (time of flight) eines Signals basiert, kann eine Sendeeinrichtung aufweisen, die eingerichtet ist, ein Signal in Richtung auf das Medium auszusenden, und eine Sensoreinheit die eingerichtet ist, reflektierte Signale zu empfangen sowie diese digital zu wandeln und aus der Laufzeit dieses Signals einen Abstand zu einem Füllgut bestimmen, um den Füllstand des Mediums zu bestimmen.

Das Füllstandmessgerät kann auch ein Drucksensor-Füllstandmessgerät sein, das mittels einer Überwachungsfunktion mit unterschiedlichen Gütestufen die Bestimmung des Füllstands überwacht.

Gemäß einem Aspekt wird vorgeschlagen, dass die Auswerteeinheit eingerichtet ist, den Füllstand des Mediums wahlweise in einem Betriebsmodus oder einem Inbetriebnahme-Modus zu bestimmen, wobei sich eine Gütestufe der Überwachungsfunktion im Betriebsmodus von einer Gütestufe der Überwachungsfunktion im Inbetriebnahme-Modus unterscheidet; und wobei die Auswerteeinheit insbesondere eingerichtet ist, mittels eines Schaltsignals, das dem Füllstandmessgerät bereitgestellt wird, zwischen dem Betriebsmodus und dem Inbetriebnahme-Modus umgeschaltet zu werden.

Bei einer Inbetriebnahme des Füllstandmessgeräte kann typischerweise eine sogenannte Referenzmessung durchgeführt werden. Hierbei wird z.B. ein Tank unter Prozessbedingungen befüllt und entleert und eine Bestimmung des korrekten Füllstands mit dem Füllstandmessgerät auf seine Richtigkeit hin überwacht. Typischerweise können dabei fünf vom Füllstandmessgerät ermittelte Füllstände mit realen, unabhängig vom Füllstandmessgerät bestimmte, Füllständen, die z.B. manuell ermittelt wurden, verglichen. Die so bestimmten Werte, also die unabhängig bestimmten und vom Füllstandmessgerät bestimmten Werte, können, zum Abschluss der Inbetriebnahme, z.B. für eine Dokumentation, insbesondere mittels des Füllstandmessgeräts, gespeichert werden.

Die Inbetriebnahme kann als erfolgreich gelten, wenn die vom Füllstandmessgerät bestimmten Füllstände mit den unabhängig ermittelten Füllständen übereinstimmen. Bei dieser Inbetriebnahme kann die Überwachungsfunktion die Bestimmung des Füllstands mit einer höheren Gütestufe empfindlicher überwachen, um beispielsweise Störungen bei der Bestimmung des Füllstands zu detektieren. Vorteilhaft ist dabei, dass bei der Inbetriebnahme noch z.B. über eine gesonderte Parametrierung, für die Bestimmung des Füllstands mit dem Füllstandmessgerät, eingegriffen werden kann, damit der eigentliche Betrieb, im Betriebsmodus, des Füllstandmessgeräts, nicht nur sicher, sondern auch zuverlässig erfolgt. Somit kann die Inbetriebnahme durch Verwendung des beschriebenen Füllstandmessgeräts verbessert werden.

Gemäß einem Aspekt wird vorgeschlagen, dass das Füllstandmessgerät einen Speicher zur Speicherung der von dem Füllstandmessgeräte bestimmten Füllstände, sowie insbesondere unabhängig bestimmte Füllstände, aufweist. Dadurch ist das Füllstandmessgerät eingerichtet, die unabhängig bestimmten Füllstände und die vom Füllstandmessgerät bestimmten Füllstände zu protokollieren.

Alternativ oder zusätzlich kann das Füllstandmessgerät eingerichtet sein, die Ergebnisse der Überwachungsfunktion zu protokollieren, indem die jeweilige Überwachungsfunktion das charakteristische Merkmal des Messsignals, um den Füllstand zu bestimmen, mittels zumindest einer Teilfunktion der Überwachungsfunktion überwacht. Insbesondere können die Ergebnisse der Überwachung mittels der jeweiligen Teilfunktion gespeichert bzw. protokolliert werden.

Gemäß einem Aspekt ist das Füllstandmessgerät eingerichtet, den Füllstand wahlweise zyklisch, d. h. in regelmäßigen Zeitabständen oder alternativ also eventgesteuert, wie zum beispielsweise durch ein Triggersignal ausgelöst, zu bestimmen. Solch ein Triggersignal kann dem Füllstandmessgerät jeweils bereitgestellt werden, wenn entsprechende einem Füllstand unabhängig bestimmte Werte für den Füllstand bestimmt wurden.

Das Füllstandmessgerät kann alternativ oder zusätzlich eingerichtet sein, die Bestimmung und/oder Speicherung und/oder Protokollierung der mit dem Füllstandmessgerät bestimmten Füllstände nur bei bestimmten vorher festgelegten Füllständen vorzunehmen.

Gemäß einem Aspekt wird vorgeschlagen, dass das Füllstandmessgerät eingerichtet ist, für eine Realisierung der Überwachungsfunktion mittels einer Metrik einen Kennwert zu bestimmen, mit dem die jeweilige Gütestufe quantifiziert werden kann. Ein Beispiel für einen solchen Kennwert kann eine Amplitude eines charakteristischen Merkmals und/oder eines relevanten Merkmals sein. Ein weiteres Beispiel kann ein Abstand des charakteristischen Merkmals und/oder des relevanten Merkmals von einer Schwellwertkurve sein. Der Kennwert und/oder die entsprechende Metrik kann zur Darstellung für einen Nutzer an einem Ausgang des Füllstandmessgeräte bereitgestellt werden und/oder an einem, insbesondere grafischen, Interface, insbesondere des Füllstandmessgeräts, dargestellt werden.

Gemäß einem Aspekt wird vorgeschlagen, dass das Füllstandmessgerät eingerichtet ist, ein Ergebnis der Überwachungsfunktion zu bestimmen, indem ein idealer Kennwert, basierend auf einer jeweiligen Metrik bestimmt wird und ein aktueller Kennwert mit dem idealen Kennwert verglichen wird. Der aktuelle Kennwert kann als Anteil vom idealen Kennwert bestimmt werden und, insbesondere prozentual, an einem, insbesondere grafischen, Interface, insbesondere des Füllstandmessgeräts, dargestellt werden.

Wenn die Überwachungsfunktion mit einer Vielzahl von Teil-Überwachungsfunktionen gebildet wird, wie weiter unten beschrieben sind, können einzelne Teil-Kennwerte der jeweiligen Teil-Überwachungsfunktion bestimmt werden und ein Gesamt-Kennwert bestimmt werden, indem die Teil-Kennwerte miteinander multipliziert werden. Auch dieser Gesamt-Kennwert kann anteilig von einem idealen Gesamt-Kennwert bestimmt werden. Dieser Gesamt-Kennwert kann, insbesondere prozentual, an einem, insbesondere grafischen, Interface, insbesondere des Füllstandmessgeräte, für einen Nutzer dargestellt werden.

Gemäß einem Aspekt wird vorgeschlagen, dass das Füllstandmessgerät eingerichtet ist, die Bestimmung des Füllstands im Betriebsmodus mit einer Gütestufe zu überprüfen, die von einer Art der Inbetriebnahme abhängt. D. h. eine Betriebs-Gütestufe im Betriebsmodus kann abhängig von der Art der Inbetriebnahme, einen Wert zwischen der höheren Gütestufe und der geringeren Gütestufe oder alternativ einen anderen Wert für die Betriebs-Gütestufe aufweisen. Vorteilhafterweise kann dadurch abgebildet werden, inwieweit die Funktion des Füllstandmessgeräts unter den Betriebsbedingungen getestet wurde, so dass das Füllstandmessgerät im Betriebsmodus nach vollständigem und erfolgreichen Test unter Betriebsbedingungen, mit einer Überwachungsfunktion in dem Betriebsmodus betrieben wird, deren Gütestufe beispielsweise weniger Ansprüche an die Bestimmung des Füllstands stellt, als die geringere Gütestufe.

Gemäß einem Aspekt wird vorgeschlagen, dass das Füllstandmessgerät wahlweise eingerichtet ist, die Überwachungsfunktion zu deaktivieren, wenn der Sensor nicht in einem sicheren Betrieb arbeitet. Das Füllstandmessgerät kann dann in einem hochverfügbaren Betriebsmodus arbeiten.

Gemäß einem Aspekt wird vorgeschlagen, dass das Füllstandmessgerät ein Ausgabemodul zur Ausgabe eines Fehlers aufweist, um ein Fehler-Signal bereitzustellen, wenn die von dem Füllstandmessgerät mittels der Überwachungsfunktion bestimmte Gütestufe und/oder der mittels der Metrik bestimmte Kennwert für die gewählte Gütestufe, insbesondere für eine sichere Messung, nicht ausreicht. Das Füllstandmessgerät kann eingerichtet sein diesen aktuellen Kennwert an einem Display des Füllstandmessgeräts anzuzeigen.

Gemäß einem Aspekt wird vorgeschlagen, dass das Füllstandmessgerät, insbesondere mit einem Schalter eingerichtet ist, die Überwachungsfunktion wahlweise zu aktivieren oder zu deaktivieren.

Gemäß einem Aspekt wird vorgeschlagen, dass das Füllstandmessgerät eingerichtet ist, einen zeitlichen Verlauf jeweils aktueller Kennwerte zu speichern, um eine Degradierung des Kennwertes zu bestimmen.

Gemäß einem Aspekt wird vorgeschlagen, dass das Füllstandmessgerät eingerichtet ist, einen Grad der Degradierung eines Kennwerts einer Überwachungsfunktion und/oder einer Teil-Überwachungsfunktion anzuzeigen, wobei ein aktuell bestimmter Kennwert mit einem Referenz-Kennwert verglichen wird, um, abhängig von einem Vergleich des aktuell bestimmten Kennwerts mit dem Referenz-Kennwert zumindest eine sichere Bestimmung des Füllstands oder eine noch akzeptable Bestimmung des Füllstands, bei der ein Ausfall der Bestimmung des Füllstands droht, oder einen Ausfall der Bestimmung des Füllstands anzuzeigen.

Insbesondere kann der Grad der Degradierung des Kernwerts angezeigt werden, um während des Betriebs des Füllstandmessgeräts eine Wartungsmeldung anzuzeigen und/oder zu triggern.

Insbesondere kann der Grad der Degradierung des Kennwerts mittels einer farblichen Anzeige, insbesondere entsprechend einer Ampel, angezeigt werden.

Für die Bestimmung des Grads der Degradierung kann der Bereich des Vergleichs des Referenz-Kennwert mit dem aktuell bestimmten Kennwert zwischen 100 % - 70 % die sichere Bestimmung des Füllstands charakterisieren und ein Bereich zwischen 40 und 50 % eine noch akzeptable Bestimmung des Füllstands charakterisieren.

Alternativ oder zusätzlich kann der aktuell bestimmte Kennwert der Gütestufe der Überwachungsfunktion auch mit einer Sollkurve verglichen werden, um abhängig von einer Differenz des aktuell bestimmten Kennwerts von der Sollkurve Bereiche zu definieren, die der farblichen Anzeige zugeordnet werden.

Insbesondere kann diese farbliche Anzeige während eines Befüllungsvorgangs, d. h. während einer schnellen Änderung des Füllstands, die Güte der Bestimmung des Füllstands anzeigen.

Gemäß einem Aspekt wird vorgeschlagen, dass das Füllstandmessgerät eingerichtet ist, ein Zeitintervall bis zum Ausfall der sicheren Bestimmung und/oder eine Füllstands-Änderung bis zum Ausfall der sicheren Bestimmung des Füllstands anzuzeigen, indem ein aktueller Kennwert einer Überwachungsfunktion oder einer Teil-Überwachungsfunktion, mit einem modellbasiert bestimmten Kennwert der Überwachungsfunktion oder der Teil-Überwachungsfunktion, verglichen wird. Ein solches Modell kann ein empirisches Modell der Veränderung des Kennwerts mit der Temperatur oder ein empirisches Modell der Veränderung des Kennwerts mit dem Füllstand sein.

Alternativ oder zusätzlich kann das Modell für ein Radar-Füllstandmessgerät auf einer Radargleichung und/oder auf einem Abstand A des Füllstands vom Füllstandmessgerät basieren, um eine Prädiktion einer zukünftigen Amplitude des charakteristischen Merkmals zu bestimmen, wobei die Amplitude A des reflektierten Signals gemäß: A =1/r⁴ mit dem Abstand r variiert.

Wenn beispielsweise in 1m Abstand des Füllstands vom Füllstandmessgerät ein reflektiertes Signal mit einer Amplitude von 100 dB erwartet wird, kann mittels der Radargleichung und/oder mittels einer Annahme für einen Verlauf der Amplitude A des charakteristischen Merkmals in einem Abstand r während eines Befüllens mittels: A = 1/r⁴ bestimmt werden, ob in einem Abstand von 0,3 m die Amplitude des reflektierten Signals ausreicht, um sich vom Antennenklingeln sicher abzuheben.

Gemäß einem Aspekt wird vorgeschlagen, dass das Füllstandmessgerät eingerichtet ist, für eine Inbetriebnahme des Füllstandmessgeräts mit Anfahren definierter Füllstände den jeweiligen Füllstand mittels der Überwachungsfunktion mit ausgewählter höheren Gütestufe zu überprüfen, wobei in dem Betriebsmodus des Füllstandmessgeräts die geringere Gütestufe der Überwachungsfunktion aktiviert ist, um insbesondere während der Inbetriebnahme Parameter für die Bestimmung des Füllstandes für den Betriebsmodus anzupassen.

Für eine solche Inbetriebnahme kann die Referenzmessung, d. h. die Inbetriebnahme mit Anfahren definierter Füllstände, am Füllstandmessgerät selbst gestartet werden und/oder Remote, beispielsweise mit einem PC oder einem Smartphone sowohl kabelgebunden als auch drahtlos mit dem Füllstandmessgerät gekoppelt, gestartet werden.

Gemäß einem Aspekt wird vorgeschlagen, dass die Überwachungsfunktion zumindest eine Überwachungs-Teilfunktion aufweist, die wahlweise jeweils eine höhere Gütestufe und eine geringere Gütestufe aufweist, um basierend auf den jeweils gewählten Gütestufe der jeweiligen Überwachungs-Teilfunktion die Gütestufen der Überwachungsfunktion zu realisieren; und insbesondere die Auswerteeinheit eingerichtet ist, ein Fehlersignal zu generieren, wenn zumindest eine der Überwachungs-Teilfunktionen bei der Überwachung der Bestimmung des Füllstands entsprechend der gewählten Gütestufe der Überwachungsfunktion ein Fehlersignal generiert, um eine Fehlbestimmung des Füllstands anzuzeigen.

Mit anderen Worten kann die Überwachungsfunktion selbst sich aus mehreren einzelnen Teilfunktionen zusammensetzen, um vorteilhafterweise unterschiedliche Eigenschaften des Messsignals und/oder der Auswertung des Messsignals, zur Bestimmung des Füllstands zu überwachen.

Vorteilhafterweise kann durch entsprechend angepasste Überwachungs-Teilfunktionen die Überwachung der Bestimmung des Füllstands unterschiedlichen Prozess- und Betriebsbedingungen des Füllstandmessgeräts angepasst werden.

Gemäß einem Aspekt wird vorgeschlagen, dass die Auswerteeinheit eingerichtet ist, basierend auf einer Anzahl der Überwachungs-Teilfunktionen, die die Bestimmung des charakteristischen Merkmals des Füllstands überwachen, die Gütestufen der Überwachungsfunktion zu realisieren; und/oder abhängig von einer Anzahl der Überwachungs-Teilfunktionen, die eine Abweichung für eine Bestimmung des charakteristischen Merkmals des Füllstands detektieren, das Fehlersignal zu generieren, um eine Fehlbestimmung des Füllstands anzuzeigen.

D. h. durch eine erhöhte Anzahl von Überwachungs-Teilfunktionen für die höhere Gütestufe und eine entsprechende verringerte Anzahl von Überwachungs-Teilfunktion für die geringere Gütestufe kann unabhängig von der jeweiligen Gütestufe der Überwachungs-Teilfunktionen eine höhere Gütestufe für die Überwachungsfunktion ausgewählt werden. Vorteilhafterweise kann durch eine höhere Anzahl von Überwachungs-Teilfunktionen bei der Inbetriebnahme des Füllstandmessgeräts, insbesondere unter Prozessbedingungen mit Anfahren verschiedener Füllstände, die Bestimmung des Füllstands empfindlicher überwacht werden, um ein Mindestmaß an Detektionssicherheit für den Füllstand zu überprüfen.

Gemäß einem Aspekt wird vorgeschlagen, dass das Füllstandmessgerät eingerichtet ist, für eine Inbetriebnahme des Füllstandmessgeräts mit Anfahren definierter Füllstände den jeweiligen Füllstand mittels der Überwachungsfunktion mit einer Anzahl von Überwachungs-Teilfunktionen zu überprüfen, wobei die Anzahl der Überwachungs-Teilfunktionen für die Inbetriebnahme des Füllstandmessgerätes größer ist als im Betriebsmodus des Füllstandmessgeräts; und wobei insbesondere für die jeweilige Überwachungs-Teilfunktion die höhere Gütestufe oder die geringere Gütestufe ausgewählt ist.

Vorteilhafterweise kann die höhere Gütestufe auch dadurch erreicht werden, dass eine größere Anzahl von Teilfunktionen der Überwachungsfunktion die Bestimmung des Füllstands überprüfen. Dadurch kann eine höhere Anforderung an die Bestimmung des Füllstands während der Inbetriebnahme den jeweiligen Bedingungen und Prozessen in denen das Füllstandmessgerät eingesetzt wird angepasst werden.

Gemäß einem Aspekt wird vorgeschlagen, dass eine erste Teilfunktion der Überwachungsfunktion zur Bestimmung einer Detektionssicherheit für das charakteristische Merkmal, eine Amplitude des charakteristischen Merkmals, das vom Füllstand des Mediums hervorgerufen wird, im Messsignal überwacht; und insbesondere einen Abstand der Amplitude des charakteristischen Merkmals von einer Schwellwertkurve für einen Verlauf des Messsignals überwacht; und die höhere Gütestufe der ersten Teilfunktion eine höhere Amplitude überwacht; und/oder das charakteristische Merkmal mit einer höher verlaufenden Schwellwertkurve überwacht, als die niedrigere Gütestufe der ersten Teilfunktion.

Mit anderen Worten ist das Füllstandmessgerät, mittels der ersten Teilfunktion der Überwachungsfunktion, eingerichtet, eine maximale Amplitude des charakteristischen Merkmals des Messsignals auszuwerten, wobei das charakteristische Merkmal auf ein reflektiertes Signal von der Füllgutoberfläche zurückzuführen ist. Dabei vergleicht die erste Teilfunktion die maximale Amplitude des charakteristischen Merkmals mit einer Mindestamplitude, die entsprechende einer gewählten Gütestufe kontinuierlich überwacht werden soll.

Wenn die maximale Amplitude des charakteristischen Merkmals die Mindestamplitude unterschreitet, kann die erste Teilfunktion der Überwachungsfunktion eine Störmeldung oder Fehlermeldung ausgegeben. Dabei ist das Füllstandmessgerät eingerichtet, dass die Mindestamplitude abhängig von einer Betriebsart des Füllstandmessgeräts gewählt werden kann. Bei der Inbetriebnahme des Füllstandmessgeräts, d. h. in einem Inbetriebnahme-Modus kann die Mindestamplitude, entsprechend einem Schwellwert, höher gewählt werden als während einem zyklischen Betrieb im Betriebsmodus. Das bedeutet, dass das Füllstandmessgerät bei einer Inbetriebnahme die Bestimmung des Füllstands empfindlicher überwacht, und somit schneller einen Fehler melden kann, als im laufenden Betrieb.

Gemäß einem Aspekt wird vorgeschlagen, dass eine zweite Teilfunktion der Überwachungsfunktion für das charakteristische Merkmal, das vom Füllstand des Mediums hervorgerufen wird, basierend auf einem modellbasierten Worst-Case-Szenario für ein Messsignal der nächsten Messung, ein nächstes charakteristisches Merkmal im Messsignal prognostiziert, um eine Vorhersage der Detektionssicherheit zu bestimmen, wobei die niedrigere Gütestufe der zweiten Teilfunktion eine Amplitude des nächsten charakteristischen Merkmals, das vom Füllstand des Mediums hervorgerufen wird, überwacht; und/oder einen Abstand der Amplitude des nächsten charakteristischen Merkmals von einer Schwellwertkurve überwacht; und insbesondere die höhere Gütestufe der zweiten Teilfunktion eine höhere Amplitude überwacht; und/oder das nächste charakteristische Merkmal mit einer höher verlaufenden Schwellwertkurve überwacht, als die niedrigere Gütestufe der zweiten Teilfunktion.

Das Füllstandmessgerät kann den Füllstand basierend auf dem Messsignal bestimmen, wobei insbesondere das Messsignal zur Bestimmung des charakteristischen Merkmals des Messsignals für den Füllstand mittels einer Anzahl einzelner Messsignale generiert wird, indem die Anzahl der einzelnen Messsignale rekursiv gemittelt werden. Die rekursive Mittelung kann eine "Scharmittelung" sein. Dabei kann unter einer sogenannten "Scharmittelung" eine Mittelung jeweils korrespondierender Werte von einer Anzahl von Messsignalen verschiedener Messungen verstanden werden und unter einer "rekursiven Scharmittelung" eine partielle Mittelung jeweils korrespondierender Werte eines jeweils aktuellen Messsignals mit einem bisherigen gemittelten Messsignal, wobei sich das bisher gemittelte Messsignal aus einer Mittelung einer Anzahl von jeweils korrespondierenden Werten vorhergehender Messsignalen ergibt.

Daraus folgt, dass ein aktuelles Messsignal in das, insbesondere prognostizierte, Messsignal nur gewichtet eingeht. Beispielsweise kann das jeweils aktuelle Messsignal einer Gewichtung von z.B. 25 % in die rekursive Mittelung eingehen. Die zweite Teilfunktion der Überwachungsfunktion bestimmt modellbasiert ein Worst Case für das nächste reflektierte Signal der nächsten Messung, um darauf basierend ein Messsignal zu prognostizieren. Mit anderen Worten kann somit eine Aussage darüber getroffen werden, inwieweit sich ein, insbesondere digital gewandeltes, Messsignal basierend auf dem nächsten Messsignal maximal ändern kann. Bei kleinen Füllstandänderungen oder Schwankungen in der Amplitude wird sich das so prognostizierte Messsignal nur moderat ändern. Die zweite Teilfunktion der Überwachungsfunktion hingegen schätzt, entsprechend einer Diagnosefunktion, modellbasiert den möglichst ungünstigsten Fall für den Verlauf des nächsten Messsignals ab.

Ein Beispiel für eine modellbasierte Worst-Case Abschätzung kann sein, dass ein nachfolgendesreflektiertes Signal, insbesondere aufgrund einer bewegten Oberfläche des Füllguts, so ungünstig reflektiert wird, dass keine Anteile des reflektierten Signals, die vom Füllstand ausgehen, zum Füllstandmessgerät gelangen. Ein charakteristisches Merkmal in dem prognostizierten Messsignal würde, bezüglich der maximalen Amplitude, entsprechend reduziert sein, jedoch, wegen der rekursiven Mittelung mit Gewichtung aufeinanderfolgender Messsignale, nicht gänzlich verschwinden.

Somit lässt sich mit der zweiten Teilfunktion eine minimale Detektionssicherheit, insbesondere mit der ersten Teilfunktion, für die nächste Bestimmung des Füllstands vorhersagen. Das Füllstandmessgerät kann mit der zweiten Teilfunktion eingerichtet sein, nur dann eine Störung oder einen Fehler zu melden, wenn das so prognostizierte Messsignal ein charakteristisches Merkmal aufweist, das bei einer Abschätzung des ungünstigsten Falls für das nächste Messsignal der nächsten Messung, entsprechend der ersten Teilfunktion eine zu geringe Detektionssicherheit bestimmt, um eine sichere und ausreichend genaue Bestimmung des Füllstands zu generieren.

Vorteilhafterweise lässt sich also mit der zweiten Teilfunktion, mittels einer Modellbildung aus einem aktuellen Messsignal vorhersagen, ob bei der nächsten Bestimmung des Füllstands das Messsignal eine entsprechende gewählte, ausreichende Güte zur Bestimmung eines sicheren Messwertes haben kann. Wenn die Güte, entsprechend einer gewünschten Detektionssicherheit, nicht ausreicht, kann das Füllstandmessgerät eingerichtet sein, eine Störung anzuzeigen.

Gemäß einem Aspekt wird vorgeschlagen, dass eine dritte Teilfunktion der Überwachungsfunktion für das charakteristische Merkmal, welches vom Füllstand des Mediums hervorgerufen wird, eine Differenz einer Amplitude zumindest eines signifikanten Merkmals im Messsignal, zum charakteristischen Merkmal überwacht, wobei das jeweilige signifikante Merkmal im Messsignal jeweils durch eine weitere Reflexion des ausgesandten Signals hervorgerufen wird; und die höhere Gütestufe der dritten Teilfunktion eine höhere Differenz der Amplitude des charakteristischen Merkmals zu zumindest einem signifikanten Merkmal des Messsignals überwacht, als die niedrigere Gütestufe der dritten Teilfunktion. Die Überwachung von signifikanten Merkmalen bei der Bestimmung des Füllstands mittels des Füllstandmessgeräts kann die sichere und zuverlässige Bestimmung des charakteristischen Merkmals verbessern und somit die Bestimmung des Füllstands verbessern.

Dabei kann ein signifikantes Merkmal des Messsignals eine Amplitude, insbesondere in einem Teilbereich, des Messsignals sein, deren Maximum über einem gewissen Schwellwert ist und/oder deren Maximum oberhalb einer gewissen Schwellwertkurve verläuft.

Vorteilhafterweise kann mit der dritten Teilfunktion ein Anwachsen von signifikanten Merkmalen überwacht werden, um eine sichere Bestimmung des charakteristischen Merkmals gewährleisten zu können.

Gemäß einem Aspekt wird vorgeschlagen, dass eine vierte Teilfunktion der Überwachungsfunktion ein Auftreten zumindest eines signifikanten Merkmals im Messsignal überwacht, um das charakteristische Merkmal des Füllstands zu identifizieren; und die höhere Gütestufe der vierten Teilfunktion einen größeren Abstand des charakteristischen Merkmals des Füllstands zu dem zumindest einen signifikanten Merkmal in dem Messsignal und/oder eine höhere Differenz der Amplitude des charakteristischen Merkmals des Füllstands zu einer Amplitude des zumindest einen signifikanten Merkmals in dem Messsignal überwacht, als die niedrigere Gütestufe der vierten Teilfunktion.

Alternativ oder zusätzlich kann die vierte Teilfunktion ein Auftreten eines signifikanten Merkmals in Teilbereichen des Messsignals überwachen. Dabei kann das signifikante Merkmal auf einem reflektierten Signalanteil basieren, das durch Anhaftungen an Wandungen und/oder Verschmutzungen bedingt ist.

Alternativ oder zusätzlich kann die vierte Teilfunktion eingerichtet sein, in unterschiedlichen Teilbereichen des Messsignals unterschiedliche Differenzen der Amplitude des charakteristischen Merkmals zu dem in diesem Teilbereich auftretenden signifikanten Merkmal zu überwachen. D. h. das unterschiedlichen Teilbereichen des Messsignals unterschiedliche geforderte Differenzen zugeordnet werden können, um die Amplitude des charakteristischen Merkmals mit der Amplitude des signifikanten Merkmals zu vergleichen.

Es wird ein Verfahren zur Inbetriebnahme eines Füllstandmessgerät vorgeschlagen, wobei das Füllstandmessgerät einer Auswerteeinheit aufweist, die mittels einer Überwachungsfunktion, die Bestimmung des Füllstands, die auf einem charakteristischen Merkmal in einem Messsignal basiert, überwacht und wobei die Überwachungsfunktion wahlweise zumindest eine höhere Gütestufe oder eine geringere Gütestufe an die Bestimmung des Füllstands aufweist und die folgenden Schritte umfasst:
- Aktivieren der Überwachungsfunktion für eine Bestimmung eines Füllstands;
- Auswählen der höheren Gütestufe der Überwachungsfunktion;
- Durchführen von Referenzmessungen des Füllstands mit dem Füllstandmessgerät bei unterschiedlichen Füllständen eines Mediums mit der Überwachungsfunktion in der höheren Gütestufe;
- Vergleichen einer Zuordnung eines jeweiligen Füllstands zu einem jeweiligen Ausgangssignal des Füllstandmessgeräts, zur Überprüfung eines sicheren Betriebs;
- Auswählen der geringeren Gütestufe der Überwachungsfunktion, um das Füllstandmessgerät in Betrieb zu nehmen.

Mit diesem Verfahren zur Inbetriebnahme kann zum einen das Füllstandmessgerät für die entsprechende Aufgabe überprüft werden und durch die höhere Gütestufe während der Inbetriebnahme kann erreicht werden, dass im Betriebsmodus des Füllstandmessgeräts eine sichere und zuverlässige Bestimmung des Füllstands möglich ist auch wenn die Betriebsbedingungen im Betriebsmodus sich von den Betriebsbedingungen bei der Inbetriebnahme unterscheiden.

Gemäß einem Aspekt wird vorgeschlagen, dass das Füllstandmessgerät eingerichtet ist, Parameter zur Bestimmung des Füllstands anzupassen; und das Verfahren zur Inbetriebnahme den folgenden Schritt aufweist:
- Anpassen der Parameter zur Bestimmung des Füllstands, um die Zuordnung des jeweiligen Füllstands zu dem jeweiligen Ausgangssignal des Füllstandmessgerätes zu optimieren. Damit kann erreicht werden, dass im Betriebsmodus das Füllstandmessgerät sicher und zuverlässig den Füllstand bestimmen kann.

Gemäß einem Aspekt wird vorgeschlagen, dass das Verfahren zur Inbetriebnahme des Füllstandmessgeräts mit einem der oben beschriebenen Füllstandmessgeräte durchgeführt wird. Mit einem der oben beschriebenen Füllstandmessgeräte kann das Verfahren zur Inbetriebsetzung besonders einfach durchgeführt werden, da die Parameter angepasst werden können, nachdem mit einer höheren Gütestufe die Referenzmessung durchgeführt wurden.

Gemäß einem Aspekt wird ein Computerprogramm angegeben, das Befehle umfasst, die bei der Ausführung des Computerprogramms durch einen Computer diesen veranlassen, eines der oben beschriebenen Verfahren auszuführen. Insbesondere kann die Auswerteeinheit einen solchen Computer umfassen, um das Verfahren und/oder zumindest einen Schritt des Verfahrens auszuführen.

Ein solches Computerprogramm kann Teil einer Bediensoftware für eine Inbetriebnahme des Füllstandmessgerät und/oder für eine Bedienung des Füllstandmessgerät sein. Alternativ oder zusätzlich kann das Computerprogramm vorgesehen sein, auf einem transportablen Bediengerät, wie einem Smartphone oder Handy oder Servicemodul, installiert zu sein, um eine Bedienung und/oder eine Inbetriebnahme des Füllstandmessgeräts durchzuführen.

Dabei kann das Computerprogramm eingerichtet sein, eine gespeicherte Prüfsumme, die auf gespeicherten Parametern für den Betrieb des Füllstandmessgeräts basiert, mit einer aktuell berechneten Prüfsumme, basierend auf den aktuellen Parametern für den Betrieb des Füllstandmessgerät, zu vergleichen. Alternativ oder zusätzlich kann das Computerprogramm eingerichtet sein, einen Inbetriebnahmeassistenten, der eingerichtet ist, eines der oben beschriebenen Verfahren durchzuführen, automatisch nicht zu starten, wenn die gespeicherte Prüfsumme gleich der aktuellen Prüfsumme ist.

Es wird ein maschinenlesbares Speichermedium angegeben, auf dem das oben beschriebene Computerprogramm gespeichert ist. Dadurch kann das Verfahren leicht auf unterschiedliche Steuer- und Kontrollgeräte implementiert werden.

Es wird eine Verwendung eines der oben beschriebenen Füllstandmessgeräte zur Detektion eines Füllstands eines Mediums und/oder zur Prozesskontrolle vorgeschlagen.

Durch die Verwendung des Füllstandmessgeräts Clusters kann ein Produktionsprozess besonders sicher überwacht werden.

Es sei noch angemerkt, dass die verschiedenen oben und/oder nachfolgend beschriebenen Ausführungsformen miteinander kombiniert werden können.

### Ausführungsbeispiele

Ausführungsbeispiele der Erfindung werden mit Bezug auf die Figuren 1 bis 7 dargestellt und im Folgenden näher erläutert. Es zeigt:
- Figur 1: ein Flussdiagramm zur Wahl einer Gütestufe;
- Figur 2: ein Flussdiagramm zur Auswahl von Überwachungs-Teilfunktionen;
- Figur 3: ein Flussdiagramm zur Auswahl von Betriebsmodi;
- Figur 4: ein Messsignal eines Füllstandmessgerätes mit charakteristische Merkmal und signifikantem Merkmal;
- Figur 5: ein Messsignal eines Füllstandmessgerätes mit einer Worst Case Abschätzung eines charakteristischen Merkmals;
- Figur 6: ein Messsignal eines Füllstandmessgerätes mit einer Schwellwertkurve; und
- Figur 7: ein Flussdiagramm zur sicheren Inbetriebnahme eines Füllstandsensors.

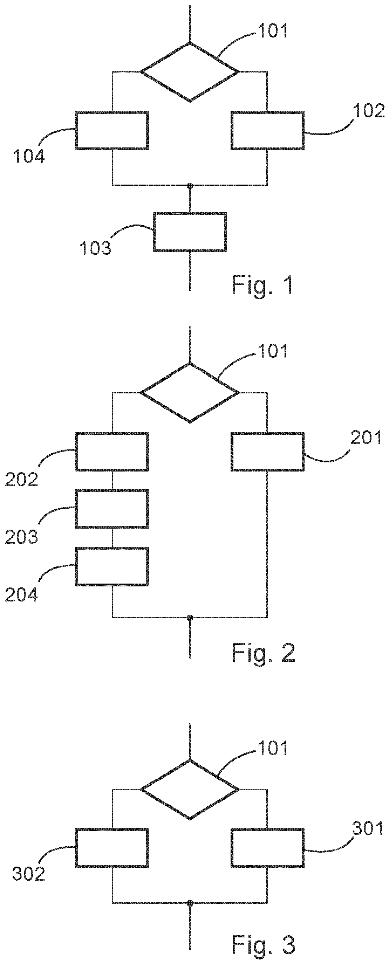

Die Figur 1 skizziert ein Flussdiagramm für eine erste Steuerung des Füllstandmessgerät mit einem Diskriminator 101 zur Wahl zwischen einem Betriebsmodus und einem Inbetriebnahme-Modus des Füllstandmessgeräts. Dabei kann der Diskriminator 101 beispielsweise mittels eines Schaltsignals oder mittels eines elektrischen Schalters oder einem GUI Schalter oder ausgelöst durch einen Tastendruck am Bedienfeld des Füllstandmessgerät oder an einer Bedienungseinheit für das Füllstandmessgerät, zwischen den unterschiedlichen Betriebsmodi geschaltet werden. Insbesondere kann der Diskriminator 101 eingerichtet sein, durch Auswahl und Bereitstellung eines entsprechenden Konfigurationswerts eines Parametersatzes zwischen den Betriebsmodi zu wählen. Sofern der Inbetriebnahme-Modus gewählt wurde, wird im Schritt 102 ein Parametersatz für eine Überwachungsfunktion für eine Referenzmessung, d. h. eine Messung für die Inbetriebnahme des Füllstandmessgerät der jeweiligen Überwachungsfunktion 103 bereitgestellt, um die Inbetriebnahme mit einer Überwachungsfunktion zu überwachen, die eine höhere Gütestufe für eine korrekte Bestimmung des Füllstands überwacht, als in dem Betriebsmodus. Alternativ kann mit dem Diskriminator 101 der Betriebsmodus ausgewählt werden, so dass in einem Schritt 104 der Überwachungsfunktion 103 ein Parametersatz für die Überwachungsfunktion im Betriebsmodus bereitgestellt wird, um im Betriebsmodus eine geringere Gütestufe für eine korrekte Bestimmung des Füllstands zu überprüfen.

Die Figur 2 skizziert ein Flussdiagramm einer alternativen zweiten Steuerung des Füllstandmessgerät mit dem Diskriminator 101. Sofern mittels des Diskriminators 101 der Betriebsmodus gewählt wurde, wird eine Überwachungsfunktion für die Bestimmung des Füllstands ausgewählt, um im Betriebsmodus eine geringere Gütestufe für die korrekte Bestimmung des Füllstands zu überprüfen. Alternativ kann mit dem Diskriminator 101 der Inbetriebnahme-Modus ausgewählt werden, der dann die Teil-Überwachungsfunktionen 202, 203 und 204 aktiviert, um im Inbetriebnahme-Modus die korrekte Bestimmung des Füllstands mit einer höheren Gütestufe zu überprüfen. Dabei kann für die jeweilige Teil-Überwachungsfunktion 202, 203 und 204 wahlweise selbst eine höhere Gütestufe oder eine geringere Gütestufe ausgewählt sein. D. h. mit anderen Worten, dass im Inbetriebnahme-Modus die Überwachungsfunktion der Inbetriebnahme aus mehreren Teilfunktionen zusammengesetzt sein kann, um in diesem Modus mehr Analysen und/oder Beiträge für die Bestimmung des Füllstands zu überwachen als beim laufenden Betrieb im Betriebsmodus.

Die Figur 3 skizziert ein Flussdiagramm einer alternativen dritten Steuerung des Füllstandmessgerät mit dem Diskriminator 101. Sofern mittels des Diskriminators 101 der Betriebsmodus gewählt wurde, wird eine Überwachungsfunktion 301 für den Betriebsmodus aktiviert bzw. ausgewählt. Wenn mittels des Diskriminators 101 der Inbetriebnahme-Modus ausgewählt wurde wird eine Überwachungsfunktion 302 für den Inbetriebnahme-Modus ausgewählt bzw. aktiviert, um während der Inbetriebnahme die Bestimmung des Füllstands mit einer höheren Gütestufe zu überprüfen als im Betriebsmodus.

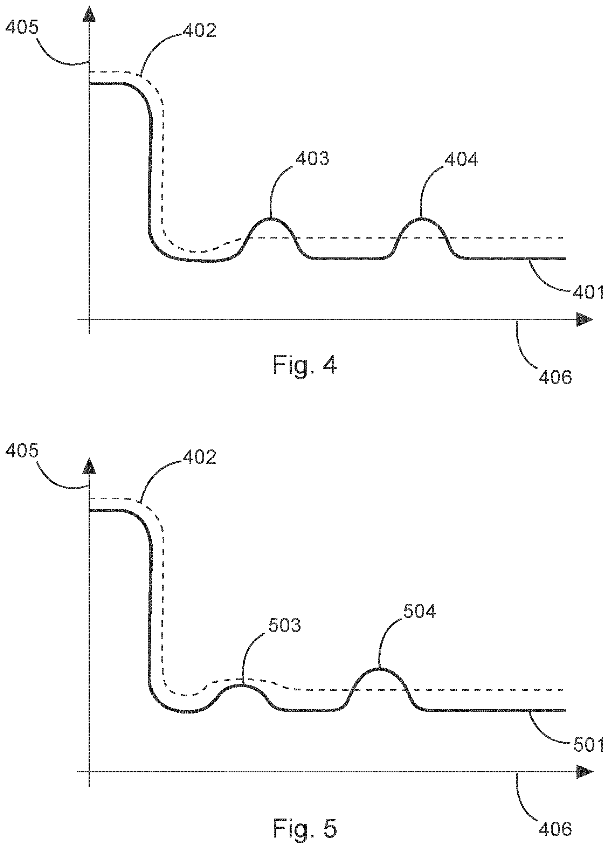

Die Figur 4 skizziert einen zeitlichen Verlauf eines Messsignals 401, bzw. einer Echokurve 401, eines Füllstandmessgeräts, wobei das Messsignal 401 auf einem reflektierten Signal basiert, das vom Füllstandmessgerät in Richtung auf das Medium ausgesandt und wieder empfangen wurde. Die Abszisse 406 ist eine Zeitachse des Messsignals, die proportional zu einer Distanz vom Füllstandmessgerät ist, die in Metern gemessen werden kann, und die Ordinate 405 gibt eine Amplitude des Messsignals, beispielsweise in dB, an. Zusätzlich ist in dem Diagramm der Figur 4 eine Schwellwertkurve 402 gestrichelt eingezeichnet. Im Verlauf des Messsignals 401 ist ein charakteristisches Merkmal 403 des Messsignals und ein signifikantes Merkmal 404 jeweils in Form eines lokalen Maximums skizziert. Basierend auf der zeitlichen Lage des charakteristischen Merkmals 403 kann der Füllstand bestimmt werden. Das signifikante Merkmal 404 kann so definiert werden, dass die Amplitude des Messsignals lokal an dieser Stelle oberhalb der Schwellwertkurve 402 verläuft. Das signifikante Merkmal 404 kann auf einem störenden reflektierten Signalanteil basieren, das von einer Störung, wie beispielsweise von einem Einbau innerhalb eines Behälters oder von einem mehrfach reflektierten Signal zwischen Füllstand und Behälterdecke, verursacht wird. Dabei verläuft das charakteristische Merkmal 403 ebenfalls oberhalb der Schwellwertkurve 402. Ein Abstand einer maximalen Amplitude des charakteristischen Merkmals 403 von der Schwellwertkurve 402 kann proportional zu einer Detektionssicherheit des charakteristischen Merkmals 402 definiert werden. Eine Metrik der Detektionssicherheit kann als Abstand zur Schwellwertkurve 402 in dB oder Prozent ausgedrückt werden. Ein dB Wert, ermittelt aus dem Abstand der maximalen Amplitude zur Schwellwertkurve, lässt sich über Referenzwerte in Prozent ausdrücken. So kann systemtheoretisch oder empirisch ermittelt werden, dass eine Detektionssicherheit von z.B. 120 dB einem Prozentwert von 100 % entspricht, wohingegen 0 dB folglich einem Prozentwert von 0 % entspricht. Der Referenzwert 120 dB kann einer maximal möglichen Detektionssicherheit der Signalverarbeitung des Füllstandmessgeräts entsprechen.

Diese Detektionssicherheit kann mit einer ersten Teil-Überwachungsfunktion überwacht werden, indem ein Abstand der maximalen Amplitude des charakteristischen Merkmals 403 von der Schwellwertkurve 402 mit einem vordefinierten Wert für einen minimalen Abstand verglichen wird. Wenn der minimale Abstand unterschritten wird, kann die erste Teil-Überwachungsfunktion ein Alarm-Signal ausgegeben und/oder einen Alarm auslösen.

Das Diagramm der Figur 5 entspricht dem Diagramm der Figur 4 und erläutert in der Zusammenschau mit der Figur 4 eine zweite Teil-Überwachungsfunktion für das charakteristische Merkmal, das vom Füllstand des Mediums hervorgerufen wird, und auf einem modellbasierten Worst-Case-Szenario für das nächste Messsignal der nächsten Messung basiert. Dabei wird ein nächstes charakteristisches Merkmal 503 im Messsignal prognostiziert, um eine Vorhersage der Detektionssicherheit zu bestimmen. Die zweite Teilfunktion bestimmt eine Amplitude des nächsten charakteristischen Merkmals 503, das vom Füllstand des Mediums hervorgerufen wird. Das Messsignal 401, das auf einem reflektierten Signal basiert, das von dem Füllstandmessgerät in Richtung auf das Medium ausgesandt wurde, kann, wie oben näher erläutert wurde, eine rekursive Mittelung aufweisen. Dabei kann die rekursive Mittelung des Messsignals 401 so erfolgen, dass eine folgende Messung nur mit einer Gewichtung von beispielsweise 25 % in die Mittelung eingeht. Mit einer ersten modellbasierten Annahme, die beispielsweise davon ausgeht, dass das (Sende-)Signal auf eine Oberfläche des Mediums von dem Füllstandmessgerät weg reflektiert wird, kann bestimmt werden, inwieweit sich das charakteristische Merkmal 503, maximal ändern kann. D.h. es könnte sein, dass das Messsignal der nachfolgenden Messung, bzw. Bestimmung, des Füllstands, aufgrund einer bewegten Oberfläche, des in Bezug auf die Füllhöhe zu bestimmenden Mediums, so ungünstig reflektiert wird, dass keine Signalanteile des (Sende-)Signals, die vom Füllstand ausgehen, zum Füllstandmessgerät, d. h. zu einem Sensor des Füllstandmessgerät, gelangen.

Bei einer zweiten modellbasierten Annahme, die von kleinen Füllstandänderung oder Schwankung im Füllstand ausgeht, wird sich das charakteristische Merkmal 503 nur moderat ändern. Wenn die zweite Teil-Überwachungsfunktion den Worst-Case abgeschätzt, wird von der ersten modellbasierten Annahme ausgegangen. Die so abgeschätzte Amplitude für das charakteristische Merkmal 503 kann mit der Schwellwertkurve 402 verglichen werden, um somit die minimale Detektionssicherheit für die nächste Messung als Prognose zu bestimmen. Die Diagnosefunktion für die, mit dieser beschriebenen Metrik qualifizierte, vorhergesagte Detektionssicherheit kann eine Störung melden, wenn die Detektionssicherheit für die Abschätzung des ungünstigen Falls einen für die vorhergesagte Detektionssicherheit vordefinierten Wert zu gering ist, um einen Füllstand ausreichend sicher und genau zu bestimmen.

Eine Anforderung an die vorhergesagte Detektionssicherheit mittels der zweiten Teil-Überwachungsfunktion kann dabei mit einer gewählten höheren Gütestufe mit einem entsprechend höheren vordefinierten Wert für die vorhergesagte Detektionssicherheit überwacht werden oder alternativ eine niedrigere Gütestufe mit einem niedrigeren vordefinierten Wert für die vorhergesagte Detektionssicherheit überwacht werden. Mittels der höheren Gütestufe kann beispielsweise die Bestimmung des charakteristischen Merkmals in einem Inbetriebnahme-Modus überwacht werden. Mittels der niedrigeren Gütestufe kann beispielsweise die Bestimmung des charakteristischen Merkmals in einem Betriebsmodus des Füllstandmessgerät überwacht werden.

Obwohl die Amplitude des charakteristischen Merkmals 503, entsprechend Figur 5 im Vergleich mit dem charakteristischen Merkmal 403 der Figur 4, abfällt, kann das charakteristische Merkmal 503 weiterhin detektiert werden, da, wegen der rekursiven Mittelung über alle aufeinanderfolgenden gewandelten Messsignale, der Einfluss einer einzigen Worst-Case Abschätzung für die Amplitude des charakteristischen Merkmals nur entsprechend der Gewichtung, wie beispielsweise zu 25 %, eingeht. Die resultierende Verminderung der Amplitude des charakteristischen Merkmals 503 kann mittels der Amplitude des charakteristischen Merkmals 403 abgeschätzt werden und wird in Figur 5 mit dem charakteristischen Merkmal 503 skizziert. Das signifikante Merkmal 404 der Figur 4 ist durch die modellbasierten Annahmen nicht betroffen und wird somit in das signifikante Merkmal 504 der Figur 5 übergeführt.

Sofern, entsprechend der Prognose, bestimmt wird, dass die vorhergesagte Detektionssicherheit unter die Schwellwertkurve 402 abfällt, kann beispielsweise eine Störmeldung generiert werden, um ein Ergebnis der Überwachung der Bestimmung des Füllstands mittels der zweiten Teilfunktion zu signalisieren.

In dem Beispiel der Figur 5 wurde das prognostizierte charakteristische Merkmal 503 mittels einer maximal möglichen Reduktion der Amplitude des charakteristischen Merkmals 401 aus der Figur 4 abgeschätzt und skizziert. Das charakteristische Merkmal für den Füllstand 403 wird in diesem Worst-Case Szenario in das charakteristische Merkmal 503 überführt, wohingegen das signifikante Merkmal einer Störung 404 in das signifikante Merkmal 504 überführt wird. Die zweite Teil-Überwachungsfunktion kann entsprechend der ersten Teil-Überwachungsfunktion detektieren, dass ein nächstes prognostiziertes charakteristisches Merkmal 503 bei der nächsten Bestimmung des Füllstands eine zu geringe Detektionssicherheit aufweisen könnte und zusätzlich mittels einer oben beschriebenen dritten Teilfunktion eine Störmeldung generieren, da das signifikante Merkmal der Störung weiterhin vorhanden sein kann und die Differenz der Amplituden des charakteristischen Merkmals unter signifikanten Merkmals zu klein ist.

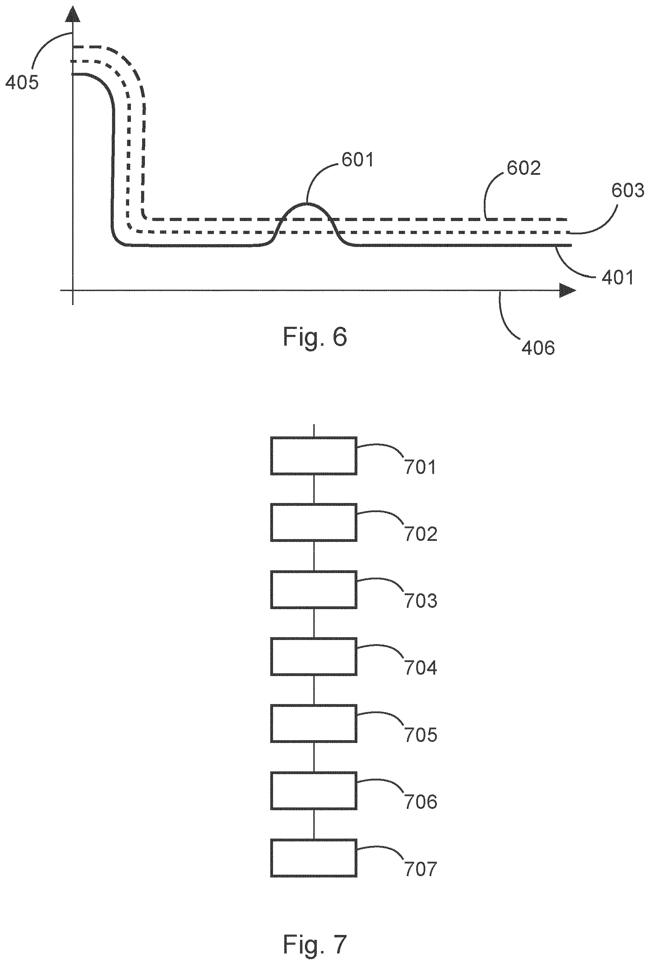

Das Diagramm der Figur 6 entspricht dem Diagramm der Figur 4 und skizziert eine Funktion der ersten Teilfunktion der Überwachungsfunktion mit einem Beispiel.

Das Messsignal 401 weist ein charakteristisches Merkmal 601 auf, dessen maximale Amplitude einen unterschiedlichen Abstand zu der ersten Schwellwertkurve 602 bzw. der zweiten Schwellwertkurve 603 aufweist. Dabei kann die erste Schwellwertkurve 602 für die höhere Gütestufe der ersten Teilfunktion der Überwachungsfunktion einen höheren Verlauf in Bezug auf die Amplitude des charakteristischen Signals 601 bzw. die Ordinate 405 aufweisen, als die zweite Schwellwertkurve 603.

Durch einen Vergleich des charakteristischen Merkmals 601 mit der ersten Schwellwertkurve 602 für die Überwachung des charakteristischen Merkmals, mittels der ersten Teilfunktion der Überwachungsfunktion, kann für einen Inbetriebnahme-Modus des Füllstandmessgerät eine höhere Gütestufe überprüft werden, als durch einen Vergleich des charakteristischen Merkmals 601 mit der zweiten Schwellwertkurve 603 für einen Betriebsmodus. Die erste Teil-Überwachungsfunktion, die einen Mindestwert der Detektionssicherheit fordert, überprüft die Bestimmung des charakteristischen Merkmals im Inbetriebnahme-Modus empfindlicher als im Betriebsmodus. Somit wird die Detektionssicherheit, die mit einer Metrik bestimmt werden kann, die den Abstand des Maximums des charakteristischen Merkmals 601 von der höher verlaufenden ersten Schwellwertkurve 602 misst, im Allgemeinen während der Inbetriebnahme im Inbetriebnahme-Modus unter der bestimmten Detektionssicherheit im laufenden Betrieb des Sensors im Betriebsmodus.

Ein Umschalten in den Inbetriebnahme-Modus der ersten Teil-Überwachungsfunktion kann mittels eines Parameterdatensatzes erfolgen, wobei die erste Teil-Überwachungsfunktion so konfiguriert ist, dass die Überwachung mit der höheren Gütestufe erfolgt. Effekte, die eine sichere Bestimmung des Füllstands beinträchtigen könnten, werden somit im Inbetriebnahme-Modus von der ersten Teil-Überwachungsfunktion eher bestimmt und kann in Form einer Störmeldung bekannt gegeben werden.

Die Figur 7 skizziert ein Flussdiagramm für ein Verfahren zur, insbesondere sicheren, Inbetriebnahme eines Füllstandsensors.

In einem ersten Schritt 701 wird, optional als Teil der Inbetriebnahme, der Füllstand Sensor an der Messstelle, z.B. einem Tank, zur Bestimmung des Füllstands eines Mediums installiert bzw. montiert und gegebenenfalls elektrisch angeschlossen, sofern es noch nicht montiert ist.

In einem zweiten Schritt 702 wird die Überwachungsfunktion für die Bestimmung des Füllstands im Inbetriebnahme-Modus, d. h. mit ausgewählter höherer Gütestufe, aktiviert und/oder Parameter und/oder Konfigurationswerte der Überwachungsfunktion für den Inbetriebnahme-Modus der Überwachungsfunktion der Auswerteeinheit des Füllstandmessgeräts bereitgestellt. Beispiele für solche Parameter und/oder Konfigurationswerte können beispielsweise eine Sendestärke des Signals und/oder eine Stärke der Mittelung des Messsignals und/oder eine Schwellwertkurve und/oder eine höhere Schwellwertkurve und/oder Parameter der Auswertealgorithmen und/oder Metriken, sowie deren Parameter für die Überwachungsfunktion und/oder Auswerte Parameter für die Erkennung des charakteristischen Merkmals des Messsignals sein.

Weiterhin kann hier als optionaler Schritt eine Messstelle bezeichnet werden oder Abgleiche vorgenommen werden.

Im dritten Schritt 703 wird das Füllstandmessgerät im Inbetriebnahme-Modus mit der entsprechend höheren Gütestufe betrieben. D.h. mit anderen Worten, das Füllstandmessgerät überprüft neben der eigentlichen Bestimmung des Füllstandes zyklisch und im Inbetriebnahme-Modus mit höherer Gütestufe mittels der Überwachungsfunktion eine Güte des Messsignals und/oder des charakteristischen Merkmals zur Bestimmung des Füllstands mit einer höheren Gütestufe.

Im vierten Schritt 704 werden die Referenzmessungen für die Inbetriebnahme durchgeführt, wobei beispielsweise fünf unterschiedliche Füllstände des Mediums, beispielsweise in einem Behälter, tatsächlich eingestellt, bzw. angefahren, werden und das Füllstandmessgerät die entsprechenden Füllstände bestimmt, um gegebenenfalls bei Störmeldungen, die auf den Ergebnissen der Überwachungsfunktion mit einer höheren Gütestufe basieren, Parameterwerte des Füllstands Messgerätes für die Bestimmung des Füllstands zu modifizieren, damit ein Füllstand des Mediums im Betriebsmodus, d. h. mit einer geringeren Gütestufe, zuverlässig bestimmt werden kann. Dabei kann vorgesehen sein, dass mit einer grafischen Benutzeroberfläche, wie beispielsweise einem Display, oder an einer Schnittstelle sowohl die ausgewählte Gütestufe der Überwachungsfunktion als auch der überwachte Fehler bereitgestellt wird. Durch Vergleichen einer Zuordnung eines jeweiligen Füllstands zu einem jeweiligen Ausgangssignal des Füllstandmessgeräts, kann ein sicherer Betrieb des Füllstandmessgerät Betriebsmodus überprüft werden. Gegebenenfalls kann dieser vierte Schritt 704 wiederholt werden, um mit neuen Parameterwerten, wie z.B. einer modifizierten Sendestärke oder einer angepassten Signalverarbeitung die Bestimmung des Füllstands neu zu konfigurieren, um bei einer erneuten Durchführung der Inbetriebnahme, die Inbetriebnahme im fünften Schritt 705 erfolgreich abzuschließen.

Im sechsten Schritt 706 kann als optionaler Schritt des Verfahrens eine Änderung der Parameter des Füllstandmessgerät zur Bestimmung des Füllstands gegen Änderungen gesichert werden.

Gerade bei sicherheitskritischen Anwendung des Füllstandmessgeräts ist eine Sicherung gegenüber Parameteränderungen des Füllstandmessgerät empfohlen, indem das Füllstandmessgerät, z.B. mittels eines Passworts oder eines PIN gegen unberechtigten Zugriff geschützt wird, um die Parametrierung gegenüber Änderungen zu schützen.

Im siebten Schritt 707 wird der Betriebsmodus des Füllstandmessgeräts für den laufenden Betrieb ausgewählt, bei dem die Überwachungsfunktion mit einer geringeren Gütestufe betrieben wird. D.h. die Überwachungsfunktion ist weiterhin zur Sicherheit aktiv, jedoch arbeitet diese unempfindlicher als während der Inbetriebnahme. Ein manuelles Eingreifen wie bei der Inbetriebnahme sollte daher ausgeschlossen sein.

## Patentansprüche

1. Füllstandmessgerät, zur Bestimmung eines Füllstands eines Mediums, mit
einer Auswerteeinheit, die eingerichtet ist:
- basierend auf einem digital gewandelten Signal eines reflektierten Signals, das von dem Füllstandmessgerät in Richtung auf das Medium ausgesandt wurde, ein Messsignal (401) zu generieren, um basierend auf einem charakteristischen Merkmal (403) des Messsignals, den Füllstand zu bestimmen; und
- mittels einer Überwachungsfunktion die Bestimmung des Füllstands, die auf dem charakteristischen Merkmal (403) basiert, zu überwachen; und wobei die Überwachungsfunktion wahlweise zumindest eine höhere Gütestufe oder eine geringere Gütestufe an die Bestimmung des Füllstands aufweist; und
- den Füllstand des Mediums wahlweise in einem Betriebsmodus oder einem Inbetriebnahme-Modus zu bestimmen, wobei sich eine Gütestufe der Überwachungsfunktion im Betriebsmodus von einer Gütestufe der Überwachungsfunktion im Inbetriebnahme-Modus unterscheidet.

2. Füllstandmessgerät gemäß Anspruch 1, wobei das Füllstandmessgerät auf einer Bestimmung einer Laufzeit des ausgesandten Signals basiert; und insbesondere ein Radar-Füllstandmessgerät oder ein Ultraschall-Füllstandmessgerät oder ein geführtes Radar-Füllstandmessgerät ist.

3. Füllstandmessgerät gemäß einem der vorhergehenden Ansprüche, wobei die Auswerteeinheit eingerichtet ist, mittels eines Schaltsignals, das dem Füllstandmessgerät bereitgestellt wird, zwischen dem Betriebsmodus und dem Inbetriebnahme-Modus umgeschaltet zu werden.

4. Füllstandmessgerät gemäß einem der vorhergehenden Ansprüche, welches eingerichtet ist, für eine Inbetriebnahme des Füllstandmessgeräts mit Anfahren definierter Füllstände den jeweiligen Füllstand mittels der Überwachungsfunktion mit ausgewählter höheren Gütestufe zu überprüfen, wobei in dem Betriebsmodus des Füllstandmessgeräts die geringere Gütestufe der Überwachungsfunktion aktiviert ist, um insbesondere während der Inbetriebnahme Parameter für die Bestimmung des Füllstandes für den Betriebsmodus anzupassen.

5. Füllstandmessgerät gemäß einem der vorhergehenden Ansprüche, wobei die Überwachungsfunktion zumindest eine Überwachungs-Teilfunktion aufweist, die wahlweise jeweils eine höhere Gütestufe und eine geringere Gütestufe aufweist, um basierend auf den jeweils gewählten Gütestufe der jeweiligen Überwachungs-Teilfunktion die Gütestufen der Überwachungsfunktion zu realisieren; und insbesondere die Auswerteeinheit eingerichtet ist, ein Fehlersignal zu generieren, wenn zumindest eine der Überwachungs-Teilfunktionen bei der Überwachung der Bestimmung des Füllstands entsprechend der gewählten Gütestufe der Überwachungsfunktion ein Fehlersignal generiert, um eine Fehlbestimmung des Füllstands anzuzeigen.

6. Füllstandmessgerät gemäß Anspruch 5, wobei die Auswerteeinheit eingerichtet ist, basierend auf einer Anzahl der Überwachungs-Teilfunktionen, die die Bestimmung des charakteristischen Merkmals des Füllstands überwachen, die Gütestufen der Überwachungsfunktion zu realisieren; und/oder abhängig von einer Anzahl der Überwachungs-Teilfunktionen, die eine Abweichung für eine Bestimmung des charakteristischen Merkmals des Füllstands detektieren, das Fehlersignal zu generieren, um eine Fehlbestimmung des Füllstands anzuzeigen.

7. Füllstandmessgerät gemäß Anspruch 5 oder 6, welches eingerichtet ist, für eine Inbetriebnahme des Füllstandmessgeräts mit Anfahren definierter Füllstände den jeweiligen Füllstand mittels der Überwachungsfunktion mit einer Anzahl von Überwachungs-Teilfunktionen zu überprüfen, wobei die Anzahl der Überwachungs-Teilfunktionen für die Inbetriebnahme des Füllstandmessgerätes größer ist als im Betriebsmodus des Füllstandmessgeräts; und wobei insbesondere für die jeweilige Überwachungs-Teilfunktion die höhere Gütestufe oder die geringere Gütestufe ausgewählt ist.

8. Füllstandmessgerät gemäß Anspruch 5 bis 7, wobei eine erste Teilfunktion der Überwachungsfunktion, zur Bestimmung einer Detektionssicherheit für das charakteristische Merkmal (403), eine Amplitude des charakteristischen Merkmals, das vom Füllstand des Mediums hervorgerufen wird, im Messsignal (401) überwacht; und insbesondere einen Abstand der Amplitude des charakteristischen Merkmals (403) von einer Schwellwertkurve (402) für einen Verlauf des Messsignals überwacht; und die höhere Gütestufe der ersten Teilfunktion eine höhere Amplitude überwacht; und/oder das charakteristische Merkmal (403) mit einer höher verlaufenden Schwellwertkurve (602) überwacht, als die niedrigere Gütestufe der ersten Teilfunktion.

9. Füllstandmessgerät gemäß Anspruch 5 bis 8, wobei eine zweite Teilfunktion der Überwachungsfunktion für das charakteristische Merkmal (403), das vom Füllstand des Mediums hervorgerufen wird, basierend auf einem modellbasierten Worst-Case-Szenario für ein Messsignal der nächsten Messung, ein nächstes charakteristisches Merkmal (503) im Messsignal (501) prognostiziert, um eine Vorhersage der Detektionssicherheit zu bestimmen, wobei die niedrigere Gütestufe der zweiten Teilfunktion eine Amplitude des nächsten charakteristischen Merkmals (503), das vom Füllstand des Mediums hervorgerufen wird, überwacht; und/oder einen Abstand der Amplitude des nächsten charakteristischen Merkmals (503) von einer Schwellwertkurve (402,602,603) überwacht; und insbesondere die höhere Gütestufe der zweiten Teilfunktion eine höhere Amplitude überwacht; und/oder das nächste charakteristische Merkmal mit einer höher verlaufenden Schwellwertkurve (602) überwacht, als die niedrigere Gütestufe der zweiten Teilfunktion.

10. Füllstandmessgerät gemäß Anspruch 5 bis 9, wobei eine dritte Teilfunktion der Überwachungsfunktion für das charakteristische Merkmal (401), das vom Füllstand des Mediums hervorgerufen wird, eine Differenz einer Amplitude zumindest eines signifikanten Merkmals (404, 504) im Messsignal (401), zum charakteristischen Merkmal (403) überwacht, wobei das jeweilige signifikante Merkmal (404, 504) im Messsignal (401) jeweils durch eine weitere Reflexion des ausgesandten Signals hervorgerufen wird; und die höhere Gütestufe der dritten Teilfunktion eine höhere Differenz der Amplitude des charakteristischen Merkmals (403) zu zumindest einem signifikanten Merkmal (404, 504) des Messsignals (401) überwacht, als die niedrigere Gütestufe der dritten Teilfunktion.

11. Füllstandmessgerät gemäß einem der vorhergehenden Ansprüche, wobei eine vierte Teilfunktion der Überwachungsfunktion ein Auftreten zumindest eines signifikanten Merkmals (404, 504) im Messsignal (401) überwacht, um das charakteristische Merkmal (403) des Füllstands zu identifizieren; und die höhere Gütestufe der vierten Teilfunktion einen größeren Abstand des charakteristischen Merkmals (403) des Füllstands zu dem zumindest einen signifikanten Merkmal (404, 504) in dem Messsignal (401) und/oder eine höhere Differenz der Amplitude des charakteristischen Merkmals (403) des Füllstands zu einer Amplitude des zumindest einen signifikanten Merkmals (404, 504) in dem Messsignal (401) überwacht, als die niedrigere Gütestufe der vierten Teilfunktion.

12. Verfahren zur Inbetriebnahme eines Füllstandmessgerät,
wobei das Füllstandmessgerät einer Auswerteeinheit aufweist, die mittels einer Überwachungsfunktion, die Bestimmung des Füllstands, die auf einem charakteristischen Merkmal (403) in einem Messsignal (401) basiert, überwacht; und wobei die Überwachungsfunktion wahlweise zumindest eine höhere Gütestufe oder eine geringere Gütestufe an die Bestimmung des Füllstands aufweist; mit
Aktivieren (702) der Überwachungsfunktion für eine Bestimmung eines Füllstands;
Auswählen (703) der höheren Gütestufe der Überwachungsfunktion;
Durchführen (704) von Referenzmessungen des Füllstands mit dem Füllstandmessgerät bei unterschiedlichen Füllständen eines Mediums mit der Überwachungsfunktion in der höheren Gütestufe;
Vergleichen einer Zuordnung eines jeweiligen Füllstands zu einem jeweiligen Ausgangssignal des Füllstandmessgeräts, zur Überprüfung eines sicheren Betriebs;
Auswählen (707) der geringeren Gütestufe der Überwachungsfunktion, um das Füllstandmessgerät in Betrieb zu nehmen.

13. Verfahren gemäß Anspruch 12, wobei das Füllstandmessgerät eingerichtet ist, Parameter zur Bestimmung des Füllstands anzupassen; weiterhin mit:
Anpassen der Parameter zur Bestimmung des Füllstands, um die Zuordnung des jeweiligen Füllstands zu dem jeweiligen Ausgangssignal des Füllstandmessgerätes zu optimieren.

14. Verfahren gemäß Anspruch 12 oder 13, mit einem Füllstandmessgerät gemäß Anspruch 1 bis 11.

15. Verwendung des Füllstandmessgerät gemäß Anspruch 1 bis 11, zur Detektion eines Füllstands eines Mediums und/oder zur Prozesskontrolle.

## Claims

1. A level-measuring device, for determining a level of a medium, by means of an evaluation unit, which is configured for
- generating a measuring signal (401) for determining the level based on a digitally converted signal of a reflected signal emitted from the level-measuring device toward the medium, wherein the level is determined based on a characteristic feature (403) of the measuring signal; and
- monitoring, by means of a monitoring function, the determination of the level based on the characteristic feature (403); and wherein the monitoring function selectively has at least one of a higher quality level or a lower quality level for determination of the level; and
- determining the level of the medium in an operating mode or a start-up mode selectively, wherein a quality level of the monitoring function in the operating mode differs from a quality level of the monitoring function in the start-up mode.

2. The level-measuring device according to claim 1, wherein the level-measuring device is based on a determination of a propagation time of the emitted signal; and in particular is a radar level-measuring device or an ultrasonic level-measuring device or a guided radar level-measuring device.

3. The level-measuring device according to any one of the preceding claims, wherein the evaluation unit is configured to be switched between the operating mode and the start-up mode by means of a switching signal provided to the level-measuring device.

4. The level-measuring device according to any one of the preceding claims, which is configured to examine the respective level by means of the monitoring function with selected higher quality level for a start-up of the level-measuring device approaching defined levels, wherein in the operating mode of the level-measuring device the lower quality level of the monitoring function is activated, particularly in order to adapt parameters for the determination of the level for the operating mode during the start-up.

5. The level-measuring device according to any of the preceding claims, wherein the monitoring function comprises at least one monitoring sub-function, which selectively generates a higher quality level and a lower quality level, respectively, in order to realize the quality levels of the monitoring function based on the respectively selected quality level of the respective monitoring sub-function; and wherein in particular the evaluation unit is configured to generate an error signal if at least one of the monitoring sub-functions generates an error signal when monitoring the determination of the level corresponding to the selected quality level of the monitoring function in order to indicate an incorrect determination of the level.

6. The level-measuring device according to claim 5, wherein the evaluation unit is configured to realize the quality levels of the monitoring function based on a plurality of the monitoring sub-functions that monitor the determination of the characteristic feature of the level; and/or to generate the error signal to indicate an incorrect determination of the level depending on a number of the monitoring sub-functions that detect a deviation for a determination of the characteristic feature of the level.

7. The level-measuring device according to claim 5 or 6, which is configured to examine the respective level by means of the monitoring function with a plurality of monitoring sub-functions for a start-up of the level-measuring device with approaching of defined levels, wherein the plurality of monitoring sub-functions for the start-up of the level-measuring device is greater than in the operating mode of the level-measuring device; and wherein in particular for the respective monitoring sub-function the higher quality level or the lower quality level is selected.

8. The level-measuring device according to claim 5 to 7, wherein a first sub-function of the monitoring function, for determining a detection reliability for the characteristic feature (403), monitors an amplitude of the characteristic feature caused by the level of the medium in the measurement signal (401), and in particular monitors a distance of the amplitude of the characteristic feature (403) from a threshold value curve (402) for a course of the measurement signal; and the higher quality level of the first sub-function monitors a higher amplitude; and/or monitors the characteristic feature (403) with a higher extending threshold value curve (602) than the lower quality level of the first sub-function.

9. The level-measuring device according to claim 5 to 8, wherein a second sub-function of the monitoring function for the characteristic feature (403) caused by the level of the medium, based on a model-based worst-case scenario for a measurement signal of the next measurement predicts a next characteristic feature (503) in the measurement signal (501) to determine a prediction of the detection reliability, wherein the lower quality level of the second sub-function monitors an amplitude of the next characteristic feature (503) caused by the level of the medium and/or monitors a distance of the amplitude of the next characteristic feature (503) from a threshold value curve (402,602,603); and in particular the higher quality level of the second sub-function monitors a higher amplitude; and/or monitors the next characteristic feature with a higher threshold value curve (602) than the lower quality level of the second sub-function.

10. The level-measuring device according to claim 5 to 9, wherein a third sub-function of the monitoring function for the characteristic feature (401) caused by the level of the medium monitors a difference of an amplitude of at least one significant feature (404, 504) in the measuring signal (401), to the characteristic feature (403), wherein the respective significant feature (404, 504) in the measuring signal (401) is caused respectively by a further reflection of the emitted signal; and the higher quality level of the third sub-function monitors a higher difference of the amplitude of the characteristic feature (403) to at least one significant feature (404, 504) of the measurement signal (401) than the lower quality level of the third sub-function.

11. The level-measuring device according to any one of the preceding claims, wherein a fourth sub-function of the monitoring function monitors an occurrence of at least one significant feature (404, 504) in the measurement signal (401) to identify the characteristic feature (403) of the level; and the higher quality level of the fourth sub-function monitors a greater distance of the characteristic feature (403) of the level to the at least one significant feature (404, 504) in the measurement signal (401) and/or a higher difference of the amplitude of the characteristic feature (403) of the level to an amplitude of the at least one significant feature (404, 504) in the measurement signal (401) than the lower quality level of the fourth sub-function.

12. A method for start-up of a level-measuring device,
wherein the level-measuring device comprises an evaluation unit, which monitors, by means of a monitoring function, a determination of the level based on a characteristic feature (403) in a measurement signal (401); and wherein the monitoring function selectively comprises at least a higher quality level or a lower quality level for determination of the level; with activating (702) the monitoring function for a determination of a fill level;
selecting (703) the higher quality level of the monitoring function;
performing (704) reference measurements of the filling level with the level-measuring device at different filling levels of a medium with the monitoring function in the higher quality level;
comparing an association of a respective level with a respective output signal of the level-measuring device, for examining a safe operation;
selecting (707) the lower quality level of the monitoring function to put the level-measuring device into operation.

13. A method according to claim 12, wherein the level-measuring device is configured to adjust parameters for determining the level; further comprising:
adjusting the parameters for determining the level to optimize the association of the respective level with the respective output signal of the level-measuring device.

14. Method according to claim 12 or 13, performed by means of a level-measuring device according to claim 1 to 11.

15. Use of the level-measuring device according to claim 1 to 11, for detecting a level of a medium and/or for process control.

## Revendications

1. Appareil de mesure de niveau de remplissage destiné à déterminer un niveau de remplissage d'un milieu, comportant une unité d'évaluation configurée pour :
- générer, sur la base d'un signal converti numériquement d'un signal réfléchi qui a été émis par l'appareil de mesure de niveau de remplissage en direction du milieu, un signal de mesure (401) pour déterminer le niveau de remplissage, sur la base d'un élément caractéristique (403) du signal de mesure ; et
- surveiller, au moyen d'une fonction de surveillance, la détermination du niveau de remplissage basée sur l'élément caractéristique (403) ; et dans lequel la fonction de surveillance a sélectivement au moins un niveau de qualité supérieur ou un niveau de qualité inférieur lors de la détermination du niveau de remplissage ; et
- déterminer sélectivement le niveau de remplissage du milieu dans un mode de fonctionnement ou un mode de mise en service, dans lequel un niveau de qualité de la fonction de surveillance dans le mode de fonctionnement est différent d'un niveau de qualité de la fonction de surveillance dans le mode de mise en service.

2. Appareil de mesure de niveau de remplissage selon la revendication 1, dans lequel l'appareil de mesure de niveau de remplissage se base sur une détermination d'un temps de propagation du signal émis ; et est en particulier un radar de mesure de niveau de remplissage ou un appareil de mesure de niveau de remplissage à ultrasons ou un radar de mesure de niveau de remplissage guidé.

3. Appareil de mesure de niveau de remplissage selon l'une des revendications précédentes, dans lequel l'unité d'évaluation est configurée pour être commutée entre le mode de fonctionnement et le mode de mise en service, au moyen d'un signal de commutation fourni à l'appareil de mesure de niveau de remplissage.

4. Appareil de mesure de niveau de remplissage selon l'une des revendications précédentes, qui est configuré pour examiner le niveau de remplissage respectif au moyen de la fonction de surveillance avec un niveau de qualité supérieur sélectionné pour une mise en service de l'appareil de mesure de niveau de remplissage approchant des niveaux de remplissage définis, dans lequel le niveau de qualité inférieur de la fonction de surveillance est activé dans le mode de fonctionnement de l'appareil de mesure de niveau de remplissage, afin d'adapter en particulier des paramètres pour la détermination du niveau de remplissage pour le mode de fonctionnement pendant la mise en service.

5. Appareil de mesure de niveau de remplissage selon l'une des revendications précédentes, dans lequel la fonction de surveillance comporte au moins une sous-fonction de surveillance ayant sélectivement un niveau de qualité supérieur et un niveau de qualité inférieur afin de réaliser les niveaux de qualité de la fonction de surveillance sur la base du niveau de qualité respectivement sélectionné de la sous-fonction de surveillance respective ; et l'unité d'évaluation est en particulier configurée pour générer un signal d'erreur lorsqu'au moins une des sous-fonctions de surveillance génère un signal d'erreur lors de la surveillance de la détermination du niveau de remplissage en fonction du niveau de qualité sélectionné de la fonction de surveillance, afin d'indiquer une détermination incorrecte du niveau de remplissage.

6. Appareil de mesure de niveau de remplissage selon la revendication 5, dans lequel l'unité d'évaluation est configurée pour réaliser les niveaux de qualité de la fonction de surveillance sur la base d'une pluralité des sous-fonctions de surveillance qui surveillent la détermination de l'élément caractéristique du niveau de remplissage ; et/ou pour générer le signal d'erreur en fonction d'une pluralité des sous-fonctions de surveillance qui détectent un écart pour une détermination de l'élément caractéristique du niveau de remplissage, afin d'indiquer une détermination incorrecte du niveau de remplissage.

7. Appareil de mesure de niveau de remplissage selon la revendication 5 ou 6, qui est configuré pour examiner le niveau de remplissage respectif au moyen de la fonction de surveillance avec une pluralité de sous-fonctions de surveillance pour une mise en service de l'appareil de mesure de niveau de remplissage approchant des niveaux de remplissage définis, dans lequel le nombre de sous-fonctions de surveillance pour la mise en service de l'appareil de mesure de niveau de remplissage est supérieur à celui dans le mode de fonctionnement de l'appareil de mesure de niveau de remplissage ; et dans lequel le niveau de qualité supérieur ou le niveau de qualité inférieur est en particulier sélectionné pour la sous-fonction de surveillance respective.

8. Appareil de mesure de niveau de remplissage selon les revendications 5 à 7, dans lequel pour déterminer une fiabilité de détection pour l'élément caractéristique (403), une première sous-fonction de la fonction de surveillance surveille une amplitude de l'élément caractéristique causé par le niveau de remplissage du milieu ; et surveille en particulier une distance de l'amplitude de l'élément caractéristique (403) par rapport à une courbe de valeurs de seuil (402) pour un tracé du signal de mesure ; et le niveau de qualité supérieur de la première sous-fonction surveille une amplitude plus élevée ; et/ou surveille l'élément caractéristique (403) avec une courbe de valeurs de seuil (602) s'étendant plus haut que le niveau de qualité inférieur de la première sous-fonction.

9. Appareil de mesure de niveau de remplissage selon les revendications 5 à 8, dans lequel une deuxième sous-fonction de la fonction de surveillance pour l'élément caractéristique (403) causé par le niveau de remplissage du milieu prédit, sur la base d'un scénario du cas le plus défavorable reposant sur un modèle pour un signal de mesure de la mesure suivante, un élément caractéristique (503) suivant dans le signal de mesure (501), afin d'établir une prédiction de la fiabilité de détection, dans lequel le niveau de qualité inférieur de la deuxième sous-fonction surveille une amplitude de l'élément caractéristique (503) suivant causé par le niveau de remplissage du milieu ; et/ou surveille une distance de l'amplitude de l'élément caractéristique (503) suivant par rapport à une courbe de valeurs de seuil (402, 602, 603) ; et le niveau de qualité supérieur de la deuxième sous-fonction surveille en particulier une amplitude plus élevée ; et/ou surveille l'élément caractéristique suivant avec une courbe de valeurs de seuil (602) plus élevée que le niveau de qualité inférieur de la deuxième sous-fonction.

10. Appareil de mesure de niveau de remplissage selon les revendications 5 à 9, dans lequel une troisième sous-fonction de la fonction de surveillance pour l'élément caractéristique (401) causé par le niveau de remplissage du milieu surveille une différence d'amplitude d'au moins un élément caractéristique (404, 504) dans le signal de mesure (401), par rapport à l'élément caractéristique (403), dans lequel l'élément significatif (404, 504) respectif dans le signal de mesure (401) est respectivement causé par une réflexion supplémentaire du signal émis ; et le niveau de qualité supérieur de la troisième sous-fonction surveille une différence de l'amplitude de l'élément caractéristique (403) jusqu'à au moins un élément significatif (404, 504) du signal de mesure (401) plus élevée que le niveau de qualité inférieur de la troisième sous-fonction.

11. Appareil de mesure de niveau de remplissage selon l'une des revendications précédentes, dans lequel une quatrième sous-fonction de la fonction de surveillance surveille une occurrence d'au moins un élément significatif (404, 504) dans le signal de mesure (401) afin d'identifier l'élément caractéristique (403) du niveau de remplissage ; et le niveau de qualité supérieur de la quatrième sous-fonction surveille une distance plus importante de l'élément caractéristique (403) du niveau de remplissage jusqu'au au moins un élément significatif (404, 504) dans le signal de mesure (401) et/ou une différence d'amplitude entre l'élément caractéristique (403) du niveau de remplissage et une amplitude du au moins un élément significatif (404, 504) dans le signal de mesure (401) plus grande que le niveau de qualité inférieur de la quatrième sous-fonction.

12. Procédé de démarrage d'un appareil de mesure de niveau de remplissage,
dans lequel l'appareil de mesure de niveau de remplissage comporte une unité d'évaluation qui surveille, au moyen d'une fonction de surveillance, la détermination du niveau de remplissage basé sur un élément caractéristique (403) dans un signal de mesure (401) ; et dans lequel la fonction de surveillance comporte sélectivement au moins un niveau de qualité supérieur ou un niveau de qualité inférieur lors de la détermination du niveau de remplissage, comportant les étapes consistant à :
activer (702) la fonction de surveillance pour une détermination d'un niveau de remplissage ;
sélectionner (703) le niveau de qualité supérieur de la fonction de surveillance ;
réaliser (704) des mesures de référence du niveau de remplissage avec l'appareil de mesure de niveau de remplissage à différents niveaux de remplissage d'un milieu avec la fonction de surveillance au niveau de qualité supérieur ;
comparer une association d'un niveau de remplissage respectif à un signal de sortie respectif de l'appareil de mesure de niveau de remplissage afin d'examiner un fonctionnement sûr ;
sélectionner (707) le niveau de qualité inférieur de la fonction de surveillance afin de mettre en service l'appareil de mesure de niveau de remplissage.

13. Procédé selon la revendication 12, dans lequel l'appareil de mesure de niveau de remplissage est configuré pour adapter des paramètres afin de déterminer le niveau de remplissage ; comportant en outre l'étape consistant à : adapter les paramètres pour déterminer le niveau de remplissage afin d'optimiser l'association du niveau de remplissage respectif au signal de sortie respectif de l'appareil de mesure de niveau de remplissage.

14. Procédé selon la revendication 12 ou 13, comportant un appareil de mesure de niveau de remplissage selon les revendications 1 à 11.

15. Utilisation de l'appareil de mesure de niveau de remplissage selon les revendications 1 à 11 pour la détection d'un niveau de remplissage d'un milieu et/ou pour le contrôle de processus.
